# FASCICULE DE BREVET EUROPEEN

(11) **EP 1 719 054 B1**
(45) Date de publication et mention de la délivrance du brevet: **07.12.2016**
(21) Numéro de dépôt: 05729304.5
(22) Date de dépôt: 17.02.2005
(51) Int. Cl.: G06F 9/54

(54) **DISPOSITIF A MEMOIRE VIRTUELLE PARTAGEE AUTO-ADMINISTREE APTE A GERER AU MOINS UN FLUX DE DONNEES MULTIPISTE**
VIRTUELLE SELBSTADMINISTRIERTE SHARED-MEMORY-EINRICHTUNG ZUR VERWALTUNG MINDESTENS EINES MEHRSPUR-DATENSTROMS
VIRTUAL SELF-ADMINISTRATED SHARED MEMORY DEVICE FOR MANAGING AT LEAST ONE MULTI-TRACK DATA STREAM

(30) Priorité: 25.02.2004 FR 0401889; 27.02.2004 US 548100 P
(43) Date de publication de la demande: 08.11.2006
(73) Titulaire: EVS Toulouse, 31500 Toulouse (FR)
(72) Inventeur: FEVRIER, Benoît, 31000 Toulouse (FR); MONESTIE, Christophe, 31000 Toulouse (FR)
(74) Mandataire: Cabinet BARRE LAFORGUE & associés
(86) Numéro de dépôt international: PCT/FR2005/000364
(87) Numéro de publication internationale: WO 2005/093570

(56) Documents cités:
- EP-A- 0 694 847
- EP-A- 1 031 927
- US-A- 5 487 167
- W. RICHARD STEVENS: "Chapter 3 - Interprocess Communication" UNIX NETWORK PROGRAMMING, 23 janvier 1990 (1990-01-23), pages 87-170, XP002291781 PRENTICE HALL, NEW JERSEY

## Description

L'invention concerne un dispositif à mémoire virtuelle partagée auto-administrée.

Une mémoire virtuelle est formée d'une zone de mémoire vive électronique associée à un(des) microprocesseur(s) sur une carte mère de l'unité centrale d'un dispositif. Cette mémoire virtuelle est organisée en blocs de mémoire, pouvant être utilisés dynamiquement par au moins un programme applicatif et/ou des tâches ou processus, en complément d'une(des) zone(s) de mémoire vive électronique utilisée(s) par le système d'exploitation et le BIOS.

Un programme applicatif est un programme destiné à un utilisateur humain pour réaliser des fonctions (informatiques ou autres) choisies par lui. Certains programmes applicatifs, notamment dans le domaine audio-visuel, utilisent ou génèrent des flux de données, dits flux multipistes, comprenant une pluralité de pistes lues et/ou écrites et/ou modifiées en parallèle. Ces flux de données peuvent nécessiter pour leur traitement un volume mémoire important, être de formats très divers, selon les applications, et nécessiter une synchronisation entre les pistes.

Or, le besoin se fait sentir de disposer d'un dispositif apte à gérer de tels flux multipistes en nombre important, en parallèle, sans saturation de la mémoire vive du dispositif.

Par exemple, il serait utile de pouvoir lire et/ou transférer d'un périphérique à un autre et/ou modifier (filtrer, convertir, transcoder, encapsuler, extraire ...) des flux multipiste audiovisuels de format quelconque tel que MPEG, MPEG2, DV, audio, ... sans nécessiter une quelconque configuration spécifique de la mémoire virtuelle requise et sans risque de saturation ou de blocage de cette mémoire virtuelle. D'autres applications nécessitent aussi le traitement de flux de données en parallèle multipistes volumineux. Par exemple, dans l'industrie pétrolière, on effectue de nombreux relevés sismiques qui forment des flux de données devant être comparés à des fichiers modèles.

On connaît déjà des dispositifs informatiques utilisant une mémoire virtuelle partagée.

Pour allouer de la mémoire virtuelle à un programme applicatif, on utilise par exemple une fonction telle que "malloc (size)" en langage C ou "new[size]" en langage C++, qui crée un bloc de mémoire virtuelle accessible uniquement par le processus utilisant cette fonction. Des librairies de fonctions systèmes connues telles que "shmat" ou "shmcreat" en langage C permettant de faire partager une même zone de mémoire virtuelle par plusieurs processus, qui ciblent donc une adresse initiale de mémoire virtuelle connue. La synchronisation est alors effectuée par des sémaphores ou des mécanismes d'exclusion mutuelle ("mutex"), de sorte que les différents processus accèdent à la mémoire partagée avec une adresse décalée de l'adresse initiale. Mais ces mécanismes de synchronisation supposent, pour chaque processus, de connaître et prendre en compte précisément les différentes tâches réalisées par les différents processus, et les formats des données exploitées en mémoire virtuelle. En outre l'allocation des blocs mémoires est statique et rigide.

EP-1 031 927 décrit un procédé pour allouer des blocs d'une mémoire partagée à différentes tâches (ou processus), consistant à identifier et allouer des blocs disponibles en mémoire pour chaque tâche via des jetons et une table d'allocation unique. Ce procédé est néanmoins indépendant des programmes applicatifs, dont il ne prend pas en compte les contraintes spécifiques. Ainsi, il est en particulier non adapté au traitement de flux de données multipistes, tels que des flux audiovisuels.

US 5,487,167 décrit un dispositif de gestion de flux de données en temps réel multitâche. Dans ce dispositif, des programmes applicatifs multimédia communiquent par l'intermédiaire d'une interface de contrôle multimédia MCI en envoyant des commandes pour contrôler des dispositifs matériels dans l'environnement multimédia. Les pilotes des dispositifs matériels passent des commandes à un sous système de synchronisation de flux S/SS par l'intermédiaire d'une interface de programmation de flux SPI à un gestionnaire de flux SSM.

Ce dispositif ne mettant en oeuvre qu'une seule ligne de tampons ne permet pas de gérer des flux multipistes de formats quelconques avec un nombre important de pistes en simultané.

Par ailleurs, EP 0.694.847 décrit un système de gestion de données permettant à des dispositifs matériels de conduire des opérations de flux via un système de bus de façon autonome. Le système central prépare préalablement l'ensemble des dispositifs périphériques ou virtuels pour traiter tout le flux de données, puis lance le premier dispositif périphérique. L'exécution des différents dispositifs périphériques successifs s'effectue sous le contrôle de chacun de ces dispositifs périphériques. En conséquence, dans ce document, la synchronisation s'effectue au niveau des dispositifs périphériques matériels eux-mêmes. Là encore, ce dispositif ne permet pas de gérer des flux multipistes de formats quelconques avec un nombre important de pistes. La synchronisation doit être effectuée de façon préalable, et ne permet pas d'effectuer des modifications en temps réel.

Par ailleurs, le chapitre "3 Interprocess Communication", du livre "UNIX NETWORK PROGRAMMING" de W. Richard Stevens, publié en 1990, décrit plusieurs techniques de communication entre processus, disponibles sous le système de gestion Unix. En particulier sont décrits les techniques bien connues de "Pipes" (section 3.4), "Streams and Messages" (section 3.6), et "Shared Memory" (section 3.11).

Aucun dispositif connu ne permet de gérer une zone mémoire virtuelle partagée auto-administrée, et donc auto-adaptative, qui permette son utilisation dynamique pour le traitement de flux de données multipistes de formats quelconques non nécessairement préalablement spécifiés, et en nombre quelconque.

L'invention vise donc à résoudre ce problème général.

L'invention vise plus particulièrement à proposer un dispositif particulièrement adapté au traitement de flux multipistes audiovisuels.

L'invention vise aussi plus particulièrement à proposer un dispositif dans lequel la gestion de la zone de mémoire virtuelle auto-administrée est assurée directement et totalement automatiquement, les programmes applicatifs n'ayant pas à traiter les problèmes d'adressage mémoire, de synchronisation entre les processus fonctionnels, et de traitement en parallèle sur diverses parties de cette zone de mémoire virtuelle auto-administrée.

L'invention vise aussi plus particulièrement à proposer un dispositif permettant de réaliser en parallèle et simultanément différents traitements (lecture, écriture, transfert, conversion, filtrage, transcodage, compression, décompression, encapsulation, extraction...).

L'invention vise aussi à proposer un dispositif dans lequel la gestion de la zone de mémoire virtuelle auto-administrée permet d'absorber les différences de débits en écriture ou en lecture de média ou périphériques.

Pour ce faire, l'invention concerne un dispositif comprenant :
- des moyens à microprocesseur(s) et mémoire(s) vive(s) aptes à exécuter au moins un système d'exploitation et au moins un programme applicatif de traitement de données,
- au moins une mémoire vive virtuelle, adaptée pour pouvoir être utilisée en tant que mémoire vive de travail pour au moins un programme applicatif, dont l'un au moins est adapté pour le traitement d'au moins un flux de données numériques,
- une pluralité de processus fonctionnels, dits processus de gestion de flux, adaptés pour pouvoir être chargés en mémoire vive et pour exécuter au moins une tâche sur des données d'un flux multipiste, par l'intermédiaire de tampons de mémoire vive,
- des moyens adaptés pour réaliser la synchronisation de l'utilisation successive des tampons par les processus de gestion de flux,
caractérisé en ce que :
a) il comprend des moyens, dits moyens de configuration, adaptés pour configurer le dispositif avec :
   - une zone de mémoire virtuelle, dite mémoire auto-administrée, réservée et dédiée au traitement de flux, dit flux multipiste, comprenant une pluralité de pistes lues et/ou écrites et/ou traitées en parallèle, cette mémoire auto-administrée comprenant une zone d'administration dédiée à l'administration de la mémoire auto-administrée, et une zone utile pour le traitement des données,
   - un processus fonctionnel, dit processus aiguilleur, adapté pour pouvoir être chargé en mémoire vive, et définir et enregistrer dans la zone d'administration, une pluralité de lignes mémoire destinées chacune à contenir une liste de tampons, dits tampons synchronisés, de ladite zone utile de la mémoire auto-administrée,
   - les processus de gestion de flux, sont adaptés pour pouvoir être chargés en mémoire vive et, avec au moins une ligne mémoire, créer et utiliser au moins un tampon synchronisé dans cette ligne mémoire, pour exécuter au moins une tâche sur des données d'un flux multipiste, puis libérer ce tampon synchronisé,
b) le processeur aiguilleur est adapté pour :
   * déterminer, en fonction de contraintes de traitement prédéfinies pour chaque flux multipiste à traiter, une séquence d'utilisation des tampons synchronisés des lignes mémoire par chaque processus de gestion de flux, dit processus actif; concerné par le traitement dudit flux multipiste,
   * transmettre à chaque processus actif, la (les) ligne(s) mémoire(s) dans laquelle (lesquelles) il doit créer et/ou utiliser des tampons synchronisés,
c) il comprend un module d'administration adapté pour réaliser la synchronisation de l'utilisation successive des tampons synchronisés de chaque ligne mémoire par les processus actifs en fonction de la séquence d'utilisation déterminée par le processus aiguilleur.

L'invention permet ainsi de traiter en parallèle simultanément (sur la même ligne de temps) des flux multipistes complètement différents, considérés jusqu'à maintenant comme totalement incompatibles entre eux, par exemple une piste au format vidéo haute définition sans compression, et une piste vidéo ayant un format à fort taux de compression tel que le format MPEG2. Ce résultat est obtenu grâce à la mémoire auto-administrée, au processus aiguilleur, aux processus de gestion de flux, et aux différentes lignes mémoire, qui permettent la synchronisation des données et l'ordonnancement des différents processus de gestion de flux qui peuvent exécuter de nombreuses tâches diverses sur les données.

Avantageusement et selon l'invention, le module d'administration est lié (à la compilation et à l'exécution) au processus aiguilleur et à chaque processus de gestion de flux, et rassemble des fonctions communes de gestion de la mémoire auto-administrée. Selon l'invention, ce module d'administration est avantageusement formé d'une librairie de fonctions communes liée (au sens informatique) aux processus par programmation orientée objet, par exemple comme une librairie liée dynamiquement en langage C++.

Outre le fait de permettre l'ordonnancement des processus de gestion de flux pour l'utilisation des tampons synchronisés d'une ligne mémoire, le module d'administration comprend d'autres fonctions communes. En particulier, avantageusement et selon l'invention le module d'administration est adapté pour déterminer, lors de la libération par un processus de gestion de flux d'un tampon synchronisé, le processus de gestion de flux subséquent défini dans la séquence d'utilisation, et, à défaut, pour supprimer le tampon synchronisé. La suppression du tampon synchronisé permet de rendre l'espace mémoire correspondant à nouveau disponible pour d'autres traitements. Il est à noter que les tampons synchronisés créés sur une même ligne mémoire ne correspondent pas nécessairement à des fragments contigus de la zone utile de la mémoire auto-administrée.

Avantageusement et selon l'invention, chaque processus de gestion de flux est adapté pour traiter les données à chaque instant avec un unique tampon synchronisé d'une ligne mémoire, puis pour libérer ce tampon synchronisé en fin de traitement, l'utilisation de différents tampons synchronisés d'une ligne mémoire par chaque processus de gestion de flux s'effectuant successivement, les uns après les autres. De ce fait, l'utilisation de l'espace de la mémoire utile est optimisée, plusieurs processus de gestion de flux pouvant être actifs simultanément sur des tampons synchronisés différents, et ce, de façon parfaitement synchronisée.

En outre, avantageusement et selon l'invention, le module d'administration comprend les fonctions suivantes :
- création de la zone d'administration et de la zone utile de la mémoire auto-administrée,
- initialisation d'une ligne mémoire avec un taux de remplissage maximum de la zone utile par cette ligne mémoire,
- création d'un tampon synchronisé dans une ligne mémoire,
- libération d'un tampon synchronisé,
- accès à un tampon synchronisé par un processus actif,
- détermination du processus actif subséquent sur la séquence d'utilisation d'un tampon synchronisé d'une ligne mémoire, après libération de ce dernier par le processus actif précédent.

Par ailleurs, avantageusement et selon l'invention le processus aiguilleur est adapté pour définir, pour chaque piste de chaque flux multipiste à traiter, au moins une ligne mémoire dédiée au traitement de cette piste. En outre, avantageusement et selon l'invention, le processus aiguilleur est adapté pour définir, pour chaque piste de chaque flux multipiste à traiter et pour chaque processus de gestion de flux traitant des données de cette piste, au moins une ligne mémoire source fournissant des données à traiter par le processus de gestion de flux et/ou au moins une ligne mémoire destination recevant des données traitées par le processus de gestion de flux.

En outre, avantageusement et selon l'invention le processus aiguilleur est adapté pour définir une et une seule séquence d'utilisation pour tous les tampons synchronisés d'une même ligne mémoire.

En outre, avantageusement et selon l'invention le processus aiguilleur est adapté pour transmettre la séquence d'utilisation de chaque ligne mémoire au premier processus de gestion des flux devant être actif sur un tampon synchronisé de ligne mémoire, ce processus de gestion de flux étant créateur de ce tampon synchronisé et définissant et enregistrant dans la zone d'administration des données identifiant ce tampon synchronisé et l'associant à la ligne mémoire et à la séquence d'utilisation.

Par ailleurs, avantageusement et selon l'invention, le processus aiguilleur est adapté pour calculer, en fonction de la nature de chaque flux multipiste à traiter, une taille maximum de la zone utile de la mémoire auto-administrée pouvant être donnée à chaque ligne mémoire. De la sorte, l'utilisation de la zone utile de la mémoire auto-administrée est optimisée par le processus aiguilleur selon les besoins de chaque piste de chaque flux multipiste, sans risque de blocage. Cette taille maximum est avantageusement définie sous forme d'un taux de remplissage, par exemple un pourcentage, de la zone utile de la mémoire auto-administrée. Elle est enregistrée dans la zone d'administration.

En outre, avantageusement et selon l'invention les processus de gestion de flux sont distincts, chacun d'eux exécutant au moins une tâche qui lui est propre. Rien n'empêche au contraire de prévoir que plusieurs versions identiques d'un ou plusieurs processus de gestion de flux soient actives simultanément, notamment pour réaliser des tâches semblables en parallèle. Les processus de gestion de flux ne communiquent pas directement les uns avec les autres.

Dans un mode de réalisation de l'invention avantageux pour de nombreuses applications du dispositif, ce dernier comprend au moins un programme applicatif, dit module lanceur, adapté pour charger en mémoire vive les différents processus et modules permettant la configuration et le fonctionnement de la mémoire auto-administrée dont :
- le processus aiguilleur,
- chaque processus de gestion de flux susceptible d'être utilisé pour le traitement de flux multipistes,
- le module d'administration,
- un module de fenêtrage dynamique sur un écran d'affichage du dispositif, adapté pour pouvoir former une interface homme/machine permettant à un utilisateur de définir chaque flux multipiste à traiter à partir de données sources d'origines diverses. Dans cette variante, c'est le chargement en mémoire du module lanceur, sur commande d'un utilisateur humain, qui permet de configurer le dispositif avec la mémoire auto-administrée, les processus de gestion de flux, et le processus aiguilleur conformément à l'invention. Le module de fenêtrage est un programme applicatif permettant à l'utilisateur d'exploiter le dispositif selon l'invention ainsi configuré de façon simple et conviviale, notamment par des commandes de type cliquer/glisser de fichiers de données sources destinées à constituer le(les) flux multipiste(s).

Dans une autre variante, qui peut d'ailleurs être combinée à la précédente, le dispositif selon l'invention peut être configuré au préalable, par exemple dès son démarrage, et fonctionner de façon plus ou moins automatique, notamment en esclave au sein d'une architecture complexe (par exemple au sein d'un réseau), ou sur commande d'un programme applicatif de contrôle automatique pour exécuter certaines tâches selon des événements prédéterminés (par exemple assembler, convertir et enregistrer sur une unité d'enregistrement plusieurs pistes lues depuis diverses sources externes). Dans cette variante, le module de fenêtrage dynamique n'est pas indispensable.

Avantageusement et selon l'invention, le dispositif comprend :
- au moins un processus de gestion de flux, dit processus de chargement, apte à écrire des données -notamment des données issues d'une unité de lecture-, en zone utile de la mémoire auto-administrée,
- au moins un processus de gestion de flux, dit processus apte à lire des données -notamment des données destinées à une unité réceptrice telle qu'un dispositif d'enregistrement, un écran d'affichage...- depuis la zone utile de la mémoire auto-administrée.

Une unité de lecture peut être un périphérique du dispositif selon l'invention, un autre dispositif ou tout dispositif susceptible d'émettre des données à destination du dispositif selon l'invention.

De même, une unité réceptrice peut être un périphérique du dispositif selon l'invention, par exemple un dispositif d'enregistrement, un autre dispositif, ou tout dispositif susceptible de recevoir des données émises par le dispositif selon l'invention.

Par ailleurs, avantageusement et selon l'invention, les processus de gestion de flux sont adaptés pour pouvoir être chargés en une zone de mémoire vive distincte de la mémoire auto-administrée. De même, le processus aiguilleur est adapté pour pouvoir être chargé en une zone de mémoire vive distincte de la mémoire auto-administrée.

En outre, avantageusement et selon l'invention, le processus aiguilleur est adapté pour, dans une première étape d'analyse, analyser les caractéristiques de chaque flux multipiste à traiter et les contraintes de traitement de chaque flux multipiste, de façon à définir les données représentant les lignes mémoires, et des données représentant chaque séquenced'utilisation des tampons synchronisés de chaque ligne mémoire pour le traitement de ce flux multipiste, puis dans une deuxième étape subséquente de traitement, lancer le traitement du flux multipiste selon lesdites données définies préalablement lors de l'étape d'analyse.

Les contraintes prédéfinies propres à chaque flux peuvent être prédéfinies par programmation du processus aiguilleur et/ou enregistrement de paramètres dans une mémoire de masse du dispositif et/ou par des données, dites métadonnées, associées au flux -notamment dans un en-tête- et lues par le processus aiguilleur et/ou fournies par le programme applicatif. Ces contraintes comprennent par exemple le nombre de pistes ; des données de synchronisation entre pistes ; la durée de chaque piste ; le taux de transfert des données depuis/vers une unité de lecture/une unitéréceptrice ; le format des données sur chaque piste ; le mode de compression des données ; la nature du traitement à effectuer sur chaque piste ....

Avantageusement, dans un dispositif selon l'invention, la taille de la mémoire auto-administrée est définie par les moyens de configuration à une valeur fixe prédéterminée -notamment comprise entre 20 % et 80 % de celle de la mémoire virtuelle, typiquement de l'ordre de 128 Mégaoctets à 15 Gigaoctets avec les mémoires actuelles-. De même, avantageusement et selon l'invention, la taille de la zone d'administration est définie par les moyens de configuration à une valeur fixe prédéterminée -notamment une valeur fixe absolue, par exemple de l'ordre de 1 Mégaoctets-. La taille de la zone d'administration est beaucoup plus faible que celle de la zone utile de la mémoire auto-administrée. En outre, avantageusement et selon l'invention, la mémoire auto-administrée est définie par le processus aiguilleur lors de son chargement en mémoire vive.

Par ailleurs, avantageusement et selon l'invention, dans la zone d'administration chaque élément, dit élément d'administration, contient une adresse d'un élément précédent et une adresse d'un élément suivant.

Avantageusement et selon l'invention, la zone d'administration comprend lors de l'étape de traitement :
- une liste des fragments de mémoire auto-administrée disponibles,
- une liste des lignes mémoire actives (c'est-à-dire définies par le processus aiguilleur),
- une liste de tampons synchronisés de la zone utile de la mémoire auto-administrée devant être utilisés par les lignes mémoire actives, et une liste des différents processus actifs qui doivent utiliser ces tampons synchronisés de mémoire auto-administrée.

Avantageusement et selon l'invention, les moyens de configuration sont adaptés pour permettre le traitement de flux multipistes qui sont des flux audiovisuels, notamment ayant des pistes dont le format est choisi parmi :
- les formats de télévision haute définition (TVHD),
- les formats de télévision de définition standard (TVSD),
- les formats de cinéma numérique,
- les formats vidéo compressés (MPEG2, MPEG4, DV...),
- les formats audio non compressés,
- les formats audio compressés,
- les formats d'encapsulation multipiste (Quicktime ®, AVI ® ...),
- les formats d'images,
- les formats de données audiovisuelles brutes.

L'invention s'étend à un support d'enregistrement susceptible d'être lu par une unité de lecture associée à un dispositif de traitement numérique, ce support d'enregistrement comprenant un programme d'ordinateur adapté pour pouvoir former des moyens de configuration d'un dispositif selon l'invention, lorsqu'il est installé, et exécuté sur ce dispositif.

L'invention s'étend à un procédé de traitement de flux multipistes à l'aide d'un dispositif selon l'invention.

L'invention s'étend également à un dispositif; à un support d'enregistrement, et à un procédé caractérisés en combinaison par tout ou partie des caractéristiques mentionnées ci-dessus ou ci-après.

D'autres buts, caractéristiques et avantages de l'invention apparaîtront à la lecture de la description suivante donnée uniquement à titre d'exemple non limitatif, qui se réfère aux figures annexées dans lesquelles :
- la figure 1 est un schéma représentant l'organisation d'une mémoire vive d'un dispositif selon l'invention,
- la figure 2 est un schéma d'un exemple d'environnement de périphériques pouvant être avantageusement exploités avec un dispositif selon l'invention,
- la figure 3 est un schéma d'un exemple de fenêtre d'une interface homme/machine activée par un module lanceur d'un dispositif selon l'invention,
- la figure 4 est un schéma illustrant un exemple d'architecture informatique fonctionnelle d'un dispositif selon l'invention,
- la figure 5 est un organigramme illustrant un exemple d'algorithme d'un processus aiguilleur d'un dispositif selon l'invention,
- la figure 6 est un organigramme illustrant un exemple d'algorithme d'un processus de gestion de flux d'un dispositif selon l'invention,
- la figure 7 est un schéma illustrant l'architecture générale des requêtes et des états des processus de gestion de flux d'un dispositif selon l'invention,
- la figure 8 est un schéma illustrant un exemple de chronogramme de deux flux multipistes, devant être traités successivement,
- la figure 9 est un schéma illustrant l'organisation du fonctionnement de la mémoire auto-administrée d'un dispositif selon l'invention pour le traitement des flux de la figure 8.

Un dispositif 1 selon l'invention est un dispositif de traitement de données numériques qui peut, du point de vue de son architecture structurelle, présenter toutes les formes de réalisation possibles connues. Il peut s'agir d'un micro-ordinateur comprenant une carte mère à microprocesseur(s) et mémoire vive (RAM) associée ; un ou plusieurs bus de connexion de barrettes de mémoire et/ou de périphériques (notamment une interface homme/machine comprenant un clavier, un dispositif de pointage, un écran d'affichage) ; et des mémoires de masse tels qu'un disque dur et/ou des lecteurs/enregistreurs de supports de mémoire de masse amovible. Il peut également s'agir d'une architecture en réseau comprenant plusieurs machines et/ou plusieurs parties de machines reliées entre elles. En tout état de cause, le dispositif selon l'invention est adapté pour former au moins une unité centrale permettant l'exécution d'au moins un système d'exploitation (notamment du type LINUX®, UNIX®, WINDOWS®, ...) et un ou plusieurs programmes applicatifs de traitement de données.

Le dispositif selon l'invention comprend en outre au moins une mémoire virtuelle 2 adaptée pour pouvoir être utilisée en tant que mémoire de travail pour des programmes applicatifs.

Une mémoire virtuelle est en effet une zone de mémoire vive gérée de façon centralisée par au moins un module du système d'exploitation, et qui peut être mis à dispositition d'au moins un programme applicatif pour lui permettre d'exécuter des tâches spécifiques.

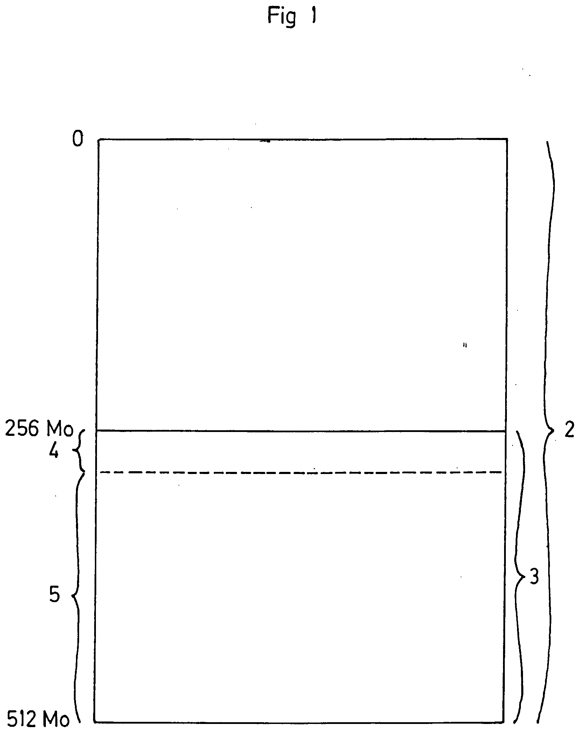

Sur la figure 1, on a représenté un exemple de mémoire vive virtuelle 2. Cette mémoire virtuelle 2 peut être une portion de mémoire vive électronique associée à un microprocesseur sur une carte mère d'ordinateur. Il est à noter que l'invention s'applique tout aussi bien à la mise en oeuvre d'une telle mémoire virtuelle avec d'autres formes de réalisation de mémoire vive, par exemple une mémoire vive associée par l'intermédiaire d'un bus à un microprocesseur. La technologie de réalisation de cette mémoire vive n'a en réalité par d'importance dans le cadre de l'invention dès lors que les capacités et les vitesses d'accès et autres caractéristiques de la mémoire matérielle mettant en oeuvre cette mémoire vive sont compatibles avec les applications qui en sont faites, notamment en terme de durée de traitement. En particulier, il est à noter que pour le traitement de flux multipistes audiovisuels, notamment en vue de leur lecture, les durées de traitement en mémoire vive doivent être suffisamment faibles pour éviter toute interruption de la lecture du flux audiovisuel ou tout phénomène de hachage ou de saccade.

Dans un dispositif selon l'invention, une portion prédéterminée de la mémoire virtuelle 2 peut être réservée et dédiée au traitement de flux multipistes. Cette zone spécifique, dite mémoire auto-administrée 3, peut être définie à l'avance, par exemple par configuration de l'utilisateur, soit sous forme d'une valeur fixe, soit par une valeur correspondant à un pourcentage de la mémoire virtuelle 2 totale ou de la mémoire vive 1 totale.

Dans l'exemple représenté figure 1, la mémoire virtuelle 2 a une capacité de 512 Mégaoctets, et la mémoire auto-administrée 3 a une capacité de 256 Mégaoctets.

En outre, la mémoire auto-administrée 3 comprend deux zones distinctes, à savoir une zone, dite zone d'administration 4, dédiée à l'administration de la mémoire auto-administrée 3 et dans laquelle des données permettant l'administration (organisation, synchronisation, défragmentation...) de la mémoire auto-administrée 3 peuvent être enregistrées ; et une zone, dite zone utile 5, faisant office de mémoire de travail pour le traitement de flux de données numériques, dits flux multipistes, comprenant une pluralité de pistes lues et/ou écrites et/ou traitées en parallèle. La taille de la zone utile 5 est très largement supérieure à celle de la zone d'administration. Les données d'administration ne sont pas des données à traiter par le dispositif, telles que des données de flux multipistes).

Les pistes du flux multipistes sont par exemple une piste vidéo, une piste audio, ... Dans un flux multipiste à l'entrée et/ou à la sortie, les pistes peuvent être transmises dans un format multiplexé sur une ligne unique et/ou compressé, par exemple MPEG2, DV .... Mais le traitement d'un flux multipiste peut comprendre au moins une tâche ou une série de tâches (lecture, enregistrement, conversion, transcodage, filtrage, compression, décompression, encapsulation, extraction d'un format encapsulé,...) à effectuer séparément sur plusieurs pistes (dont le nombre peut être très important).

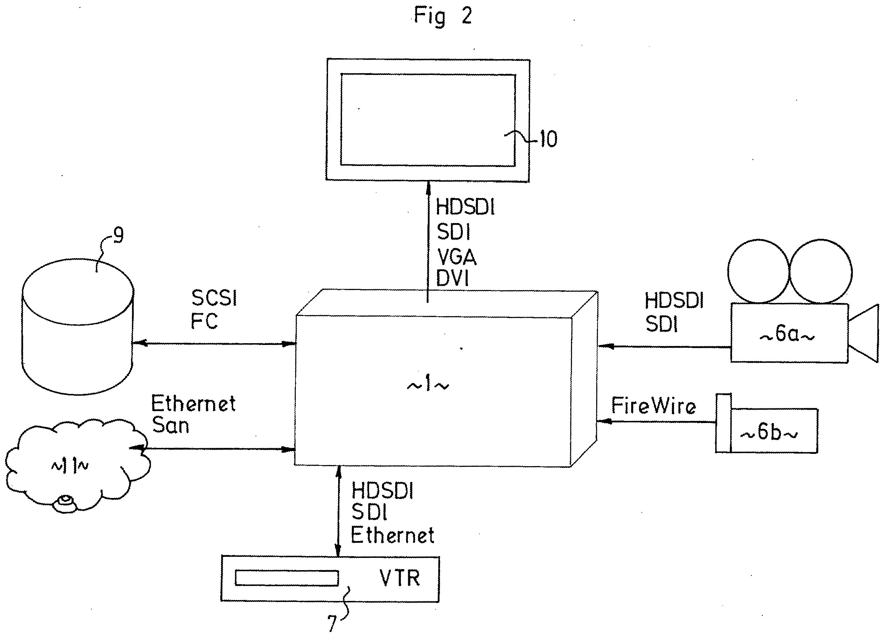

Comme représenté figure 2, le dispositif 1 selon l'invention peut être utilisé pour le traitement de flux de données en provenance et/ou à destination de divers périphériques de formats normalement incompatibles entre eux. Dans l'exemple représenté figure 2, il est prévu des caméras (par exemple du typecinéma numérique, vidéo numérique ou camescope numérique, ...) qui peuvent fournir des données vidéo via des interfaces de type HDSDI, SDI, "Firewire" (dénommée aussi "I-Link" ou IEEE1394), ou Ethernet. Dans l'exemple, on a représenté une caméra de cinéma numérique 6a et un camescope DV 6b. Il est également prévu un magnétoscope 7 ou autre dispositif lecteur/enregistreur qui peut acquérir et/ou fournir des données vidéo via des interfaces de type HDSDI, SDI, "Firewire" ou un réseau local, par exemple de type Ethernet. Il peut être également prévu une mémoire de masse telle qu'une unité de disque 9, par exemple de type RAID fournissant et/ou recevant des données vidéo, un écran d'affichage de type VGA ou un moniteur vidéo 10 recevant des données vidéo par une interface de type HDSDI, SDI ou analogique, et une liaison à un réseau 11 par une interface de type Ethernet ou réseau de stockage partagé "SAN". Dans cet exemple, le dispositif 1 selon l'invention constitue un serveur vidéo.

Bien sûr, cette illustration n'est qu'un exemple et toute autre liaison fournissant ou recevant des données multipistes peut être prévue, par exemple un récepteur d'émission de télévision (par voie hertzienne, satellite ou câble, ...).

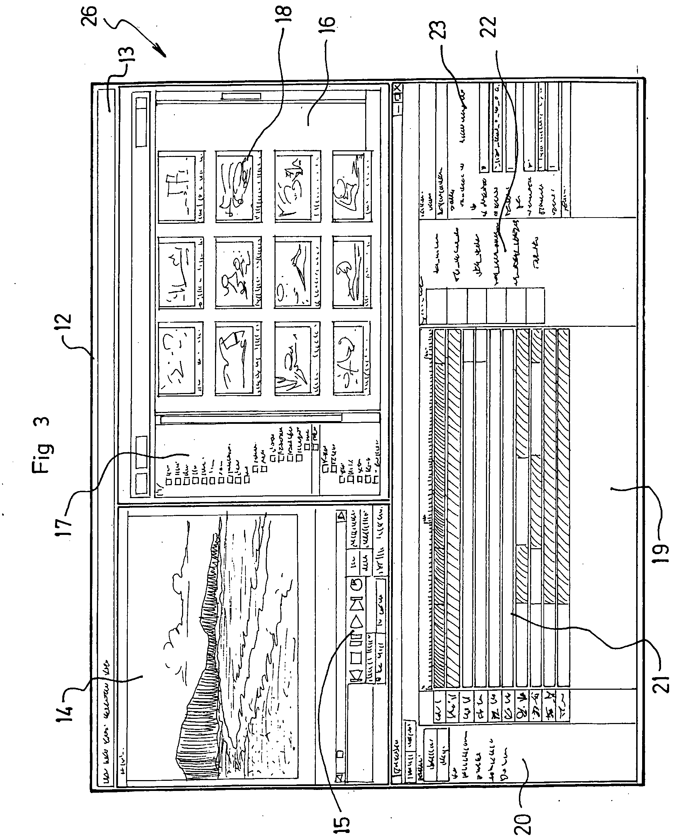

Le dispositif selon l'invention comprend au moins un programme applicatif, dit module lanceur, adapté pour charger en mémoire vive et lancer l'exécution de moyens de configuration du dispositif conformément à l'invention. Ce module lanceur lance en particulier un module de fenêtrage dynamique qui réalise, sur un écran d'affichage du dispositif, une fenêtre 26 telle que celle représentée figure 3, adaptée pour pouvoir former une interface homme/machine 26 permettant à un utilisateur de définir chaque flux multipiste à traiter à partir de données sources d'origines diverses. Dans l'exemple représenté figure 3, la fenêtre 26 comprend une barre de titre 12, une barre de menu 13, une fenêtre de visualisation vidéo 14 associée à une zone 15 de commande/affichage d'informations de lecture/enregistrement (retour arrière, retour rapide, lecture, pause, stop, avance rapide, avance, compteur, ...). Il est prévu également une fenêtre 16 de navigation comprenant une zone 17 d'affichage de l'arborescence de fichiers et une zone 18 d'affichage de miniatures ou d'icônes représentant des fichiers.

La fenêtre 26 comprend en outre une fenêtre de montage 19 comprenant une zone de commandes ou d'actions 20, une zone 21 de représentation chronographique des flux multipistes à traiter utilisée dans le cas d'une édition, une zone 22 d'outils de filtrage pouvant être actionnés par l'utilisateur et une zone 23 complémentaire d'affichage/saisie de commandes spécifiques. Il peut être prévu aussi avantageusement une zone (non représentée dans l'exemple) pour la gestion de l'acquisition de flux multipistes.

Avec une telle fenêtre 26, l'utilisateur peut par exemple simplement sélectionner un fichier dans la zone de navigation 16 et le déplacer vers la zone d'affichage chronographique 21, ce qui aura pour effet de prendre en compte le flux multipiste associé à ce fichier dans son traitement par la mémoire auto-administrée 3. Grâce à l'invention, on peut en particulier associer sur le même chronogramme et monter en simultané de façon synchronisée différents flux multipistes de formats complètement différents, normalement incompatibles, et notamment des formats haute définition, des formats en définition standard, des formats compressés ou non compressés, des formats d'encapsulation (Quicktime ®, AVI ®, ...).

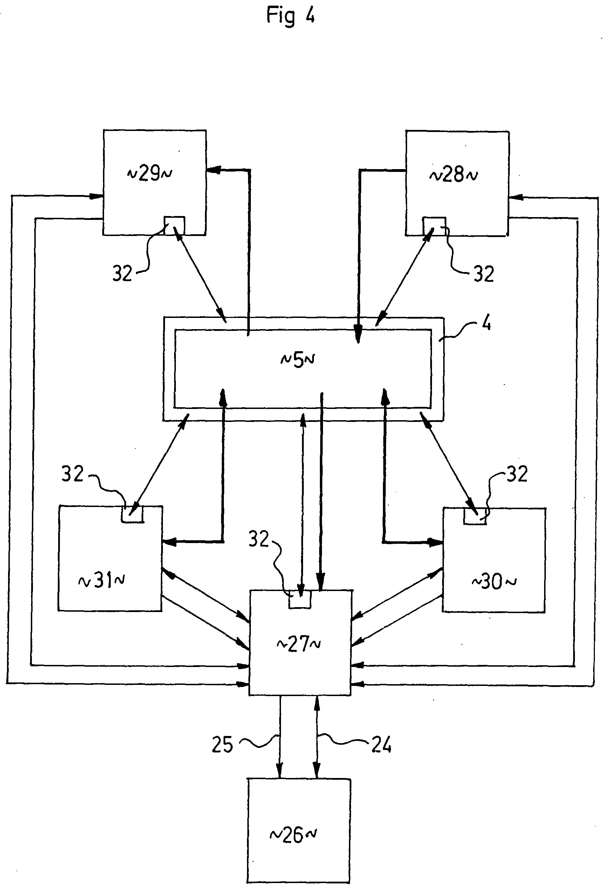

La figure 4 représente un exemple d'architecture informatique correspondant aux moyens de configuration de la mémoire auto-administrée 3 dans un dispositif selon l'invention. Cette architecture comprend l'interface homme/machine 26 représentée figure 3.

Cette interface homme/machine 26 communique avec un processus fonctionnel, dit processus aiguilleur 27 qui est chargé en mémoire vive 1 et exécuté de préférence sur la même machine que celle sur laquelle la mémoire auto-administrée 3 est gérée. Ce processus aiguilleur 27 est un processus fonctionnel, c'est-à-dire un processus de type serveur de bas niveau dans le système d'exploitation qui n'est pas directement visible ni accessible par l'utilisateur.

Les moyens de configuration selon l'invention comprennent en outre d'autres processus fonctionnels, dits processus de gestion de flux, dont le nombre n'est pas limité, chacun d'entre eux étant adapté pour pouvoir être chargé en mémoire vive 1 et réaliser au moins une tâche sur des données d'un flux multipiste. De très nombreux processus de gestion de flux peuvent être développés selon les fonctions à effectuer pour l'application à envisager du dispositif selon l'invention. De préférence, chaque processus de gestion de flux est adapté pour effectuer une tâche spécifique unique, ou une série de tâches correspondant à une fonction de traitement unique sur une piste d'un flux multipiste, par exemple, une lecture, un enregistrement, un transfert vers un périphérique tel qu'un écran d'affichage, un filtrage, un transcodage, une compression, une décompression, une encapsulation, une extraction d'un format encapsulé, ...

Il est à noter cependant que l'interface homme/machine 26 communique directement et uniquement avec le processus aiguilleur 27, et en aucune manière avec les processus de gestion de flux. Dès lors, quelle que soit la fonction requise par le programme applicatif commandé par l'interface homme/machine 26, cette fonction est nécessairement adressée au processus aiguilleur 27 et traitée et analysée par ce dernier.

Dans l'exemple non limitatif représenté figure 4, il est prévu, à titre de processus de gestion de flux, un processus 28 de chargement de données dans la zone utile 5 de la mémoire auto-administrée 3, un processus 29 d'enregistrement de données depuis la zone utile 5 de la mémoire auto-administrée 3, un processus 30 de filtrage de données lues dans la zone utile 5 de la mémoire auto-administrée 3 et ré-écrite après filtrage dans la zone utile 5 de la mémoire auto-administrée 3, et un processus 31 de contrôle de périphériques de visualisation. Il est à noter que les différents processus de gestion de flux ne communiquent pas entre eux directement. Ils communiquent directement uniquement avec le processus aiguilleur 27. La communication entre la fenêtre dynamique d'interface homme/machine 26 et le processus aiguilleur 27 s'effectue par deux liaisons dédiées de communication (par exemple de type "SOCKET"), à savoir une liaison de communication de type commande/acquittement CMD/ACK 24, et une liaison de surveillance 25 permettant de transmettre les statuts, les codes temporels et les éventuelles erreurs entre le processus aiguilleur 27 et le module de fenêtrage dynamique 26.

Chaque processus de gestion de flux 28, 29, 30, 31 est configuré par le processus aiguilleur 27. Par ailleurs, les différents processus de gestion de flux 28 à 31 n'échangent entre eux que des données correspondant au contenu des flux multipistes, via la zone utile 5 de la mémoire auto-administrée 3.

Chaque processus de gestion de flux 28 à 31 est relié au processus aiguilleur 27 par deux liaisons de communication (par exemple de type "SOCKET"), à savoir une liaison de commande/acquittement (CMD/ACK) et une liaison de surveillance d'éventuelles erreurs relevées par le processus de gestion de flux 28 à 31 correspondant.

Il est prévu également une librairie commune 32 d'opérations informatiques que les processus de gestion de flux 28 à 31, et le processus aiguilleur 27 utilisent pour effectuer des commandes ou tâches communes via des écritures/lectures en mémoire. Cette librairie 32 forme un module, dit module d'administration 32, lié par programmation à chaque processus 27, 28 à 31. Il est à noter que la mémoire auto-administrée 3 avec les processus de gestion de flux 28 à 31 et le processus aiguilleur 27 et le module d'administration 32 peuvent fonctionner de façon entièrement autonome, sans nécessiter l'exécution d'un fenêtrage dynamique, ou plus généralement d'une interface graphique utilisateur telle que 26.

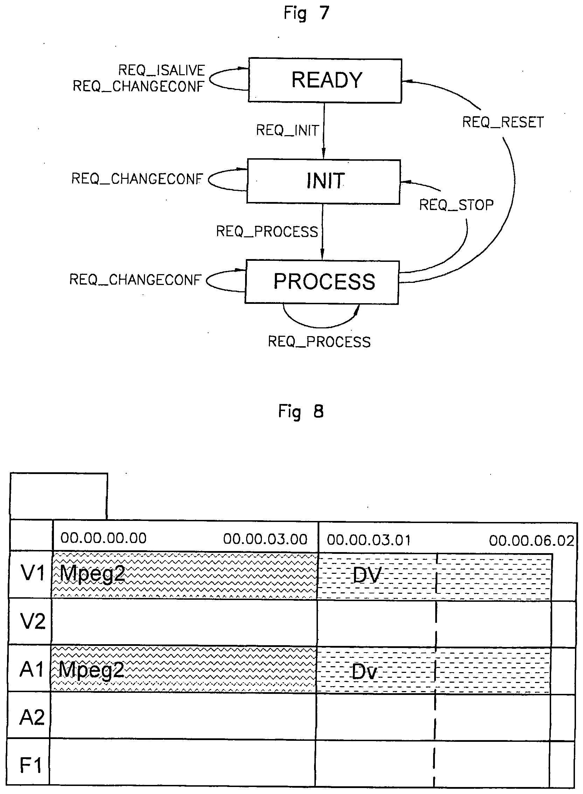

Les différents processus de gestion de flux 28 à 31 sont de préférence similaires dans leur fonctionnement et leur architecture. Cette architecture générale commune est représentée par exemple figure 7.

Le service REQ_ISALIVE permet au module d'interface homme/machine 26 de savoir si les différents processus de gestion de flux sont chargés et actifs ou non.

Le service REQ_INIT réalise l'initialisation du processus de gestion de flux et de place à l'état "INIT" représenté figure 7. C'est à la réception de ce service que tous les processus de gestion de flux vont être configurés avant le lancement d'une action sur des données à traiter. Chaque processus de gestion de flux possède également un service REQ_CHANGECONF qui permet au processus aiguilleur 27 de changer la configuration spécifique de ce processus de gestion de flux.

REQ_PROCESS désigne de façon générique toutes les actions effectuées sur chaque flux multipiste par un processus de gestion de flux qui se trouve alors dans l'état "PROCESS" représenté figure 7.

La requête REQ_STOP place le processus de gestion de flux à l'état initialisé. La requête REQ_RESET permet au processus de gestion de flux de repasser dans un état stable "READY".

La librairie 32 formant le module d'administration comprend diffférentes fonctions communes pouvant être utilisées par les processus, et notamment :
- une fonction de création de la zone d'administration 4 et de la zone utile 5 de la mémoire auto-administrée, consistant à réserver les zones de mémoire vive correspondantes avec leurs adresses mémoire correspondantes,
- une fonction d'initialisation dans la zone d'administration 4 d'une ligne mémoire (sur commande du processus aiguilleur 27), avec un taux de remplissage maximum (calculé par le processus aiguilleur 27), de la zone utile 5 par cette ligne mémoire,
- une fonction de création d'un tampon synchronisé dans une ligne mémoire, (par un processus de gestion de flux créateur d'un tel tampon synchronisé) avec sa taille mémoire, son numéro, son adresse, sa séquence d'utilisation (liste des différents processus de gestion de flux actifs devant accéder successivement à ce tampon, telle que déterminée par le processus aiguilleur 27), et un champ mémorisant son état courant,
- une fonction d'accès à un tampon synchronisé d'une ligne mémoire par un processus de gestion de flux actif,
- une fonction de libération d'un tampon synchronisé après utilisation par un processus de gestion de flux, permettant de rendre ce tampon synchronisé disponible pour le processus de gestion de flux subséquent, ou de supprimer ce tampon synchronisé s'il s'agit du dernier processus de gestion de flux actif devant intervenir sur ce tampon synchronisé,
- une fonction de synchronisation consistant à déterminer, après libération d'un tampon synchronisé par un processus actif, quel est le processus actif subséquent devant intervenir sur ce tampon synchronisé, à partir de la séquence d'utilisation de ce tampon synchronisé.

Cette librairie 32 peut être formée de classes programmées par exemple en langage C++.

Le module lanceur charge en mémoire vive, outre l'interface homme/machine 26, le processus aiguilleur 27, chaque processus de gestion de flux 28 à 31, et la librairie 32 (module d'administration), ces processus 27 à 31, entre eux et la librairie 32 étant liés.

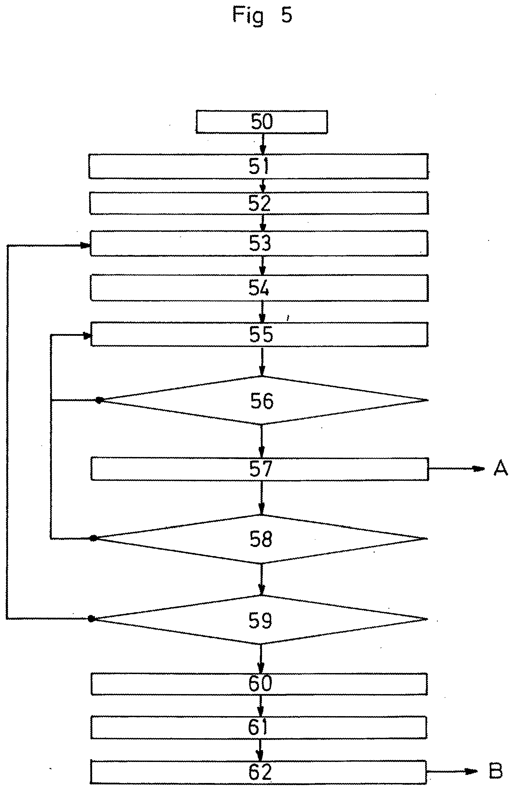

La figure 5 représente un organigramme de fonctionnement du processus aiguilleur 27.

L'étape 50 représente l'initialisation du processus aiguilleur 27 et son chargement en mémoire, par exemple sous l'effet du lancement du module lanceur. Lors de l'étape 51 subséquente, le processus aiguilleur 27 créé la mémoire auto-administrée 3,. Il crée une connexion avec chaque processus de gestion de flux 28 à 31. Lorsque l'utilisateur exécute une commande sur la fenêtre 26, le processus aiguilleur 27 reçoit en fait une séquence de flux multipiste(s) sous forme d'un chronogramme classiquement désigné "liste d'éditions". Cette réception est schématisée par l'étape 52 figure 5.

Il exécute ensuite, lors de l'étape 53, l'analyse de cette liste d'éditions et ouvre une boucle sur les différentes éditions, c'est-à-dire sur les différentes pistes à traiter.

Le processus aiguilleur 27 enregistre (étape 54), dans la zone d'administration de la mémoire auto-administrée 3, une ou plusieurs lignes de mémoire, dont en général au moins une ligne mémoire source et/ou au moins une ligne mémoire destination. Le processus aiguilleur 27 crée au moins une ligne mémoire pour chaque piste (source ou destination) à traiter. Il est à noter qu'une même ligne mémoire peut faire office de source et de destination pour les données à traiter.

Par exemple, il crée une ligne mémoire pour recevoir une piste vidéo source et une ligne mémoire source pour recevoir une piste audio qui doivent être traitées en parallèle, et/ou une ou plusieurs ligne(s) mémoire de destination pour recevoir le résultat du traitement par le processus de gestion de flux actif.

Cette étape d'analyse 53 permet au processus aiguilleur 27 de définir le nombre de ligne mémoire, la taille maximum en mémoire de chaque ligne mémoire, et la séquence d'utilisation des tampons synchronisés sur chaque ligne mémoire, et ce en fonction des contraintes prédéfinies par le programme applicatif qui fournit le flux multipiste à traiter au processus aiguilleur 27. Dans l'exemple, ce programme applicatif est constitué de l'interface homme/machine 26. L'étape 53 d'analyse est en particulier lancée lorsque l'utilisateur place un fichier dans la zone d'affichage chronographique 21 à l'aide de son dispositif pointeur, ce qui a pour effet de fournir au processus aiguilleur 27 des requêtes et des paramètres correspondant au flux multipiste à traiter. A réception d'une telle requête d'édition d'un flux multipiste, le processus aiguilleur 27 détermine dans un premier lieu si le traitement à effectuer consiste en une édition ou, au contraire, en une acquisition.

### Cas d'une édition :

En fonction des paramètres transmis par le programme applicatif 26, le processus aiguilleur 27 détermine si l'édition doit être filtrée et/ou visualisée et/ou enregistrée et détermine la séquence d'utilisation des tampons synchronisés pour chaque ligne mémoire à créer, correspondant en réalité à la séquence d'intervention des différents processus de gestion de flux qui doivent être actifs sur chaque piste du flux multipiste.

Les paramètres pris en compte sont :
- un fichier "liste d'éditions" (edl),
- un fichier "liste de fichiers" (edl fichier),
- un fichier "liste de filtres" (edl de filtre).

Pour chaque édition, c'est-à-dire chaque piste, de la liste d'éditions, le processus aiguilleur 27 détermine le format des données, c'est-à-dire notamment le standard audio/vidéo dans lequel elles sont enregistrées, et détermine la taille de l'édition (c'est-à-dire de la piste) par rapport à la taille maximum des différentes éditions de la séquence, pour déterminer le pourcentage de zone utile 5 de mémoire vive pouvant affecté à chaque ligne mémoire correspondant à chaque piste.

Le processus aiguilleur 27 crée ensuite une ligne mémoire source pour chaque piste audio et une ligne mémoire source pour chaque piste vidéo, et calcule et met en forme les paramètres destinés au processus de chargement, à savoir l'identification des différentes lignes mémoire utilisées et les séquences d'utilisation correspondantes.

Le processus aiguilleur 27 détermine ensuite si chaque édition, c'est-à-dire chaque piste, doit être filtrée ou non. Dans l'affirmative, le processus aiguilleur 27 extrait du fichier de filtres envoyés en paramètres le ou les filtres relatifs à la piste à filtrer, et vérifie le nombre d'entrée/sortie, puis crée autant de lignes mémoire qu'il y a de sortie pour le (les) filtre(s) à appliquer. Le processus aiguilleur 27 prépare ensuite et met en forme les paramètres destinés au processus de filtrage, à savoir l'identification des différentes lignes mémoire source audio et vidéo et des différentes lignes mémoire de destination de la piste.

Le processus aiguilleur 27 examine ensuite si la piste doit être ou non visualisée. Dans l'affirmative, et si la piste a également été filtrée, le processus aiguilleur 27 utilise les lignes mémoire de destination identifiées pour le processus de filtrage. Si la piste doit être visualisée mais sans filtrage, le processus aiguilleur 27 envoie les lignes mémoire source audio et vidéo préalablement créées au processus de visualisation. Il est à noter que dans ce cas, les lignes mémoire source font aussi office de lignes mémoire de destination. Le processus aiguilleur 27 calcule et met en forme ensuite les paramètres destinés au processus de visualisation (lignes mémoire et séquences d'utilisation).

Le processus aiguilleur 27 détermine ensuite le flux de l'édition doit être ou non enregistré. Dans l'affirmative et si le flux a fait l'objet d'un filtrage, le processus aiguilleur 27 utilise des lignes mémoire de destination du processus de filtrage. Si le flux doit être enregistré sans filtrage, le processus aiguilleur 27 envoie les lignes mémoire source audio et vidéo au processus d'enregistrement. Là encore, il calcule ensuite et met en forme des paramètres destinés au processus d'enregistrement (lignes mémoire et séquences d'utilisation).

### Cas d'une acquisition :

En fonction des paramètres reçus du programme applicatif, le processus aiguilleur 27 détermine si l'acquisition est visualisée et enregistrée et calcule la séquence d'utilisation des tampons synchronisés correspondante.

Les paramètres sont :
- un fichier "liste d'éditions d'acquisition" (edl acquisition),
- un fichier "liste de fichiers" (edl fichier).

Pour chaque édition de la liste d'édition transmise au processus aiguilleur 27, ce dernier détermine le format des données (standard audio/vidéo), et calcule la taille de l'édition d'acquisition par rapport à la taille maximum des différentes pistes de chaque flux multipiste de la séquence à acquérir, de façon à déterminer le pourcentage de zones utiles de la mémoire auto-administrée pouvant utilisées par chaque ligne mémoire.

Dans le cas où le processus aiguilleur 27 détecte ensuite la présence de pistes audio dans la liste d'éditions d'acquisition, il crée une ligne mémoire d'acquisition pour chaque piste audio correspondante. De même, lorsque le processus aiguilleur 27 détecte la présence de pistes vidéo dans la liste d'éditions d'acquisition, il crée une ligne mémoire d'acquisition pour chaque piste vidéo correspondante.

Le processus aiguilleur 27 détermine et met en forme ensuite les paramètres destinés au processus d'acquisition, notamment l'identification des différentes lignes mémoire et leur séquence d'utilisation.

Le processus aiguilleur 27 détermine ensuite si l'édition doit être visualisée ou non. Dans l'affirmative, il prépare les paramètres correspondants (lignes mémoire d'acquisition) pour le processus de visualisation. Ensuite, le processus aiguilleur 27 détermine et met en forme les paramètres destinés au processus d'enregistrement.

L'étape d'analyse 53 et l'étape 54 de création des lignes mémoire décrites ci-dessus ne sont que des exemples non limitatifs et bien d'autres formes d'analyse peuvent être prévues, selon les applications du dispositif selon l'invention.

L'étape suivante 55 consiste à ouvrir une boucle sur les différents processus de gestion de flux 28 à 31 chargés en mémoire. Pour chacun de ces processus, il est effectué lors de l'étape 56 un test pour déterminer si ce processus de gestion de flux 28 à 31 peut être concerné par la piste à traiter. Dans l'affirmative, le processus aiguilleur 57 envoie les lignes mémoire et les informations de synchronisation (séquence d'utilisation) correspondantes au premier processus de gestion de flux concerné, lors de l'étape 57. Dans la négative, le processus reboucle pour passer au processus de gestion de flux suivant. Après l'étape 57, on exécute un test 58 pour terminer la boucle, c'est-à-dire pour savoir s'il s'agissait du dernier processus de gestion de flux de la séquence d'utilisation. Si tel n'est pas le cas, on passe au processus de gestion de flux suivant. Si tel est le cas, on exécute un test 59 pour savoir si la piste traitée était la dernière. Si tel n'était pas le cas, on reboucle à l'étape 53 pour réexécuter les étapes 54 à 58 sur la piste suivante. S'il s'agissait de la dernière piste, la première phase d'analyse de la séquence de flux multipiste(s) à traiter est terminée, et on passe à une phase subséquente d'exécution comprenant tout d'abord une étape 60 d'initialisation du processus aiguilleur 27, puis de réception lors de l'étape 61 d'une commande de la part de l'utilisateur, c'est-à-dire du programme applicatif commandé par l'utilisateur (interface homme/machine 26), et on envoie ensuite, lors de l'étape 62, une action à chaque processus de gestion de flux 28 à 31 pour déclencher la mise en fonctionnement de ces processus de gestion de flux, et ce de façon synchronisée les uns avec les autres.

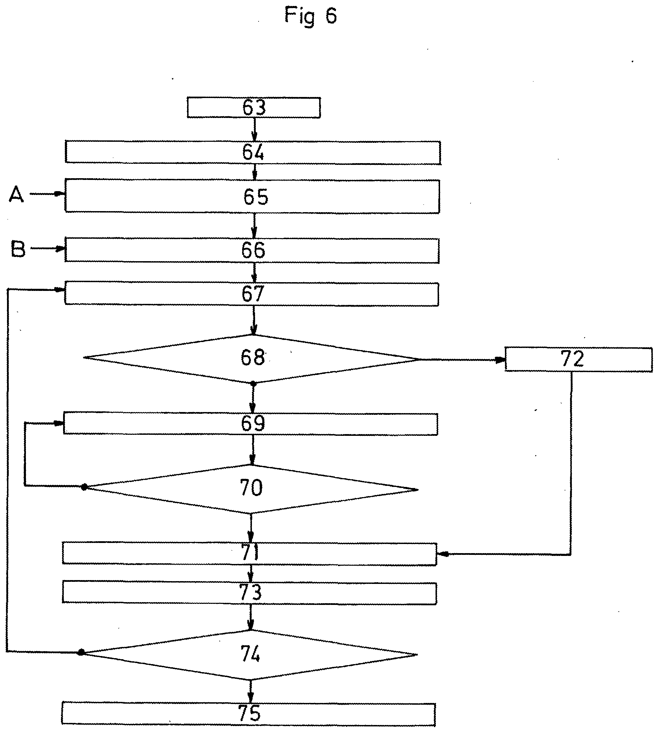

La figure 6 représente l'organigramme de fonctionnement d'un processus de gestion de flux commandé par le processus aiguilleur 27. Sur les figures 5 et 6, les liens entre les deux organigrammes sont représentés par les lettres A et B.

L'étape 63 correspond au lancement du processus de gestion de flux, suivi de l'étape 64 d'attachement de ce processus de gestion de flux à la mémoire auto-administrée 3, c'est-à-dire à l'état "READY" représenté figure 7.

Lors de l'étape 65 subséquente, le processus de gestion de flux peut recevoir une liste d'éditions (une séquence de flux multipistes) qui lui est envoyée par le processus aiguilleur 27 à l'issue de l'étape 57 de ce processus aiguilleur 27. Si le processus de gestion de flux reçoit ensuite une action lors de l'étape 66 de la part du processus aiguilleur 27 (suite à l'étape 62 d'envoi d'action de ce processus aiguilleur 27), le processus de gestion de flux ouvre une étape 67 d'ouverture de boucle qui permet de parcourir chaque piste de la liste correspondant chacune à une ligne mémoire. Suite à cette étape 67, il exécute un test 68 permettant de déterminer si l'action demandée et la fonction qu'il exécute correspond ou non à la création d'un ou plusieurs tampon(s) synchronisé(s) dans la zone utile 5 de la mémoire auto-administrée 3. Dans la négative, le processus de gestion de flux exécute une étape 69 d'attente synchronisée sur un tampon synchronisé de la mémoire auto-administrée 3. Il exécute ensuite un test 70 pour déterminer si ce tampon synchronisé est ou non disponible sur la ligne mémoire source.

Il est à noter que le tampon synchronisé sur lequel le processus de gestion de flux se positionne est déterminé à l'avance dans la ligne mémoire par le processus aiguilleur 27, et cette donnée est connue du processus de gestion de flux.

Tant que le tampon synchronisé n'est pas disponible tel que déterminé par le test 70, le processus de gestion de flux revient à l'étape 69 d'attente. Lorsque le tampon synchronisé devient disponible, le processus de gestion de flux exécute l'étape ultérieure 71 de traitement des données dans ce tampon synchronisé.

Egalement, si le test 68 détermine que le processus de gestion de flux doit créer un tampon synchronisé, il est alors exécuté l'étape 72 de création de ce tampon synchronisé, puis le processus passe à l'étape 71 de traitement des données dans le tampon synchronisé ainsi créé.

Le processus de gestion de flux crée un tampon synchronisé lorsqu'il est le premier processus de gestion de flux à intervenir sur une ligne mémoire à traiter. Après exécution de l'étape 71 de traitement des données, le processus de gestion de flux libère le tampon synchronisé lors de l'étape 73 pour le rendre disponible pour le processus de gestion de flux devant ensuite intervenir sur cetampon synchronisé. Après cette étape 73 de libération du tampon synchronisé, le processus de gestion de flux termine la boucle de parcours des différents flux de la liste grâce au test 74 qui, après avoir traité toutes les pistes de la liste, exécute une étape 75 de fin de traitement de cette liste d'éditions.

La librairie commune 32 permet de définir différents éléments d'administration qui sont en réalité des listes, puisque chaque élément d'administration contient une référence aux éléments suivant et précédent.

Un élément d'administration de type fragment de mémoire est défini de plus par son décalage de début par rapport à l'adresse de base de la zone utile 5 de la mémoire auto-administrée 3, son décalage de fin par rapport à l'adresse de base de cette zone utile 5 de la mémoire auto-administrée 3 et par sa taille.

Un élément de type ligne mémoire ou "TRACK" est défini de plus par un identifiant, une liste de tampons synchronisés qui lui sont associés et par sa taille.

Un élément d'administration de type tampon mémoire ou "BUFFER" est défini en plus par son identifiant, son adresse en mémoire (décalage par rapport à l'adresse de début de la zone utile 5 de la mémoire), sa taille, une séquence d'utilisation (ou table de transition), et une variable représentant son état.

La zone d'administration 4 est découpée en tampons d'administration où seront définis les éléments d'administration (lignes mémoires, tampons mémoire ou fragments de mémoire libres).

Lors de la demande de création d'une ligne mémoire ou d'un tampon de mémoire, le module d'administration 32 convertit un élément d'administration libre en un élément de type ligne mémoire ou de type tampon de mémoire.

Dans le cas d'une conversion en élément de type ligne mémoire, le processus aiguilleur 27 définit la séquence d'utilisation en fonction des contraintes de traitement du flux multipiste et notamment selon les différents processus de gestion de flux qui seront nécessaires à ce traitement.

Dans le cas d'une conversion d'un élément en tampon de mémoire, le module d'administration 32 récupère un fragment de la zone utile 5 libre à partir de la liste des fragments de mémoire libre, et ce en fonction de la taille désirée pour ce tampon. Trois cas peuvent se présenter :
1) Si le fragment de mémoire libre a une taille inférieure à la taille du tampon de mémoire désirée, le module d'administration va récupérer le prochain fragment de mémoire libre et recommencer le test. S'il n'a pas de fragment de mémoire libre, une erreur est remontée au processus de gestion de flux créateur (le processus fait alors plusieurs demandes successives attendant la libération d'une zone par un autre processus).
2) Si le fragment de mémoire libre a la même taille que la taille du tampon désirée, on affecte la valeur de début du fragment à la valeur adresse du tampon mémoire, et on supprime le fragment mémoire libre de la liste de fragments de mémoire libre dans la zone d'administration 4.
3) Si au contraire le fragment de mémoire a une taille supérieure à la taille du tampon mémoire désirée, on affecte la valeur de début du fragment à la valeur adresse du tampon et on réduit le fragment de mémoire libre de la taille affectée au tampon.

Ensuite, on initialise l'état du tampon de mémoire à la valeur correspondante à un numéro identifiant le processus de gestion de flux actif sur ce tampon.

Lors de la libération d'un tampon synchronisé par un processus de gestion de flux, l'état évoluera en fonction de la séquence d'utilisation définie pour ce tampon synchronisé (soit retour à l'état initial, soit passage à l'état suivant, ce dernier cas provoquant la disponibilité du tampon synchronisé pour le processus de gestion de flux subséquent, soit suppression du tampon dans le cas où il s'agirait du dernier processus de gestion de flux dans la séquence d'utilisation).

Si la libération du tampon synchronisé implique sa suppression, le module d'administration 32 convertit ce dernier en fragment de mémoire libre, et l'on ajoute à la suite de la liste des fragments de mémoire libre dans la zone d'administration 4. Ensuite, il défragmente la zone utile 5 de la mémoire en vérifiant que le tampon synchronisé libéré est ou n'est pas adjacent à un ou deux fragments de mémoire libre.

Lors de la demande d'accès d'un tampon synchronisé par un processus de gestion de flux, les vérifications suivantes sont effectuées avant de donner l'accès au tamponsynchronisé :
- la ligne mémoire existe-t-elle ?
- le tampon synchronisé existe-t-il ?
- le tampon synchronisé est-il disponible pour le processus de gestion de flux (vérification de son état courant) ?

Si le tampon synchronisé est disponible pour ce processus de gestion de flux, l'adresse du tampon synchronisé est renvoyée au processus de gestion de flux qui peut l'utiliser. Sinon, un code indique l'état du tampon synchronisé.

Le processus de gestion de flux a la possibilité de demander l'accès à un tampon mémoire de manière asynchrone (utile pour un processus de vérification), c'est-à-dire qu'il peut récupérer un tampon mémoire indépendamment de l'état de ce dernier.

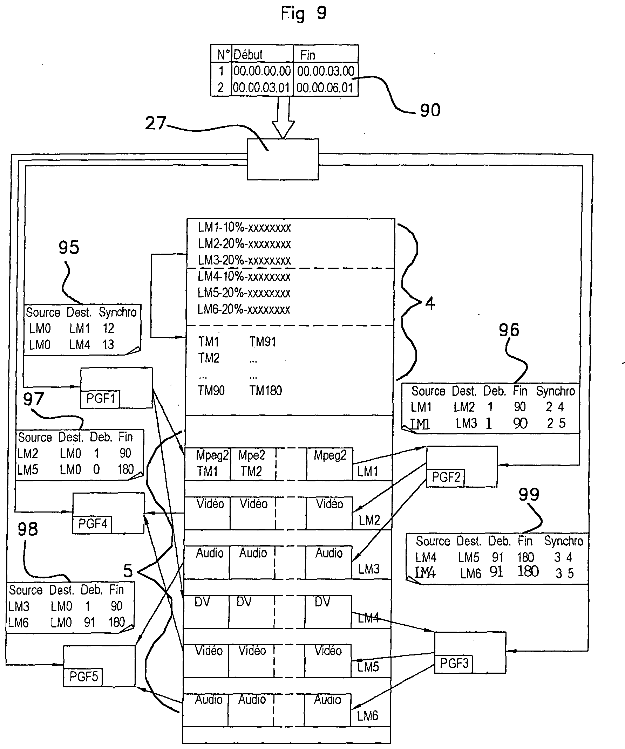

Il est à noter qu'un tel procédé de gestion de mémoire auto-administrée mis en oeuvre dans un dispositif selon l'invention peut être implémenté dans n'importe quel langage informatique supportant l'allocation dynamique de mémoire et la gestion de mémoire partagée. Il est à noter également que les données descriptives contenues dans un tampon mémoire peuvent varier. Par exemple, les identifiants (tampon mémoire ou de la ligne de mémoire) constitués de nombres entiers peuvent être remplacés par des chaînes de caractères.Les figures 8 et 9 illustrent un exemple d'application particulier. Il est à noter que cet exemple ne correspond pas strictement à l'exemple d'implémentation représenté figure 4. Sur la figure 8, on a représenté un exemple de chronogramme de deux flux audiovisuels successifs, à savoir une séquence au format MPEG2 qui dure 3 secondes et qui comprend une piste vidéo V1 et une piste audio A1, suivie d'une séquence DV, qui dure aussi 3 secondes, comprenant également une piste vidéo V1 et une piste audio A1.

La figure 9 représente schématiquement le traitement de ces flux par la mémoire auto-administrée 3 conformément à l'invention. La liste d'édition 90 est fournie au processus aiguilleur 27. Dans l'exemple représenté, les processus de gestion de flux suivants sont prévus : un processus PGF1 de chargement, un processus PGF4 de visualisation vidéo, un processus PGF5 d'écoute audio, un processus PGF2 de décompression MPEG 2, et un processus PFG3 de décompression DV.

Dans l'exemple représenté, chaque processus de gestion de flux utilise au moins une ligne mémoire source et au moins une ligne mémoire destination. La ligne mémoire LM0 en tant que source signifie que le processus de gestion de flux est créateur de tampon synchronisé (et premier intervenant de la séquence d'utilisation) et ne reçoit pas de données d'une ligne mémoire (par exemple processus de chargement). De même, la ligne mémoire LM0 en tant que destination signifie que le processus de gestion de flux est le dernier intervenant de la séquence d'utilisation sur un tampon synchronisé.

Le processus aiguilleur 27 définit dans la zone d'administration 4 à l'aide de la librairie 32, six lignes mémoire, LM1, LM2, LM3, LM4, LM5, LM6 avec, pour chacune d'entre elles, sa taille maximum et son adresse de début. Par exemple, la taille maximum pour la ligne mémoire LM1 et pour la ligne mémoire LM4 est de 10 % de la zone utile 5 de la mémoire auto-administrée 3. Et la taille maximum des lignes mémoire LM2, LM3, LM5 et LM6 est de 20 % de la zone utile 4 de la mémoire auto-administrée 3.

Chaque processus de gestion de flux créateur de tampons synchronisés sur une ligne mémoire destination définit également des tampons synchronisés tels que TM1, TM2..., et enregistre dans la zone d'administration 4 leur taille, leur numéro, leur adresse, leur séquence d'utilisation, et leur état courant, le tout à l'aide de la librairie 32.

On a représenté dans la zone utile 5 de la mémoire auto-administrée 3 les différentes lignes mémoire LM1 à LM6 et la nature des données qui y sont traitées. On a également représenté les données de synchronisation qui sont adressées par le processus aiguilleur 27 à chacun des processus de gestion de flux qui identifient les lignes mémoire source et destination et les informations de synchronisation (séquences d'utilisation et/ou identification des tampons synchronisés).

Dans l'exemple représenté, le processus aiguilleur 27 fournit au premier processus de gestion de flux (PGF1) qui est le processus de chargement, les informations 95 comprenant le numéro de la ligne mémoire source, qui, dans l'exemple, est LM0, et le numéro de la ligne mémoire de destination ainsi que la séquence d'utilisation des tampons synchronisés de cette ligne mémoire de destination. Pour la première liste d'éditions (séquence MPEG2), la ligne mémoire de destination est LM1 et la séquence d'utilisation est 1,2, ce qui signifie que les processus de gestion de flux PGF1 et PGF2, successivement, devront intervenir successivement sur les données issues de la ligne mémoire LM1 pour le traitement de ce flux. Pour la deuxième liste d'édition (séquence DV), la ligne mémoire source est LM0, la ligne mémoire destination est LM4 et la séquence d'utilisation est 1,3, ce qui signifie que les processus PGF1 et PGF3, interviendront successivement.

Le processus PGF1 de chargement est créateur de tampons synchronisés puisqu'il doit charger les données de la ligne mémoire source dans la zone utile 5 de la mémoire. Le processus PGF1 de chargement crée donc les tampons synchronisés nécessaires. Typiquement, dans l'exemple représenté, trente tampons synchronisés par seconde du flux doivent être créés. Ainsi, le processus PGF1 de chargement utilise successivement quatre-vingt dix tampons synchronisés TM1, TM2, ..., TM90 pour la séquence MPEG2 sur la ligne mémoire de destination LM1. Pour ce faire, il crée un premier tampon synchronisé TM1, y charge des données de la séquence MPEG2, puis libère ce tampon TM1. Le module d'administration 32 permet alors au processus de gestion de flux actif subséquent d'intervenir, c'est-à-dire le processus PGF2 qui réalise la décompression MPEG2. Le processus de chargement réitère ces opérations successivement sur les quatre-vingt dix tampons synchronisés TM1 à TM90.

Préalablement, le processus aiguilleur 27 avait fourni les informations 96 au processus PGF2 de gestion de flux subséquent. De la sorte, ce processus PGF2 sait qu'il doit intervenir sur une ligne mémoire source LM1, et sur les lignes mémoire de destination LM2 avec la séquence d'utilisation 2, 4 (PGF2 puis PGF4) et LM3 avec la séquence d'utilisation 2, 5 (PGF2 puis PGF5), et ce pour les tampons synchronisés commençant au tampon synchronisé TM1 jusqu'au tampon synchronisé TM90. Ainsi, cet exemple montre que, grâce à l'invention, plusieurs processus de gestion de flux sont actifs simultanément sur des tampons synchronisés différents, et ce, de façon parfaitement synchronisée.

Le processus PGF2 peut ainsi utiliser la ligne mémoire LM2 pour la piste vidéo issue du flux MPEG2 et la ligne mémoire LM3 pour la piste audio issue du flux MPEG2. Il charge et libère successivement les tampons synchronisés de ces deux lignes mémoire avec les données appropriées, comme décrit ci-dessus pour le processus PGF1. Le module d'administration 32 permet alors l'utilisation des tampons synchronisés par le processus de gestion de flux PGF4 de visualisation vidéo de la ligne mémoire LM2 au fur et à mesure de la libération successive de ces tampons synchronisés.. Il permet ainsi, de la même façon, l'utilisation successive des tampons de la ligne mémoire LM3 par le processus PGF5 d'écoute audio.

Là encore, le processus aiguilleur 27 avait fourni préalablement les informations 97 et, respectivement 98 à ces processus PGF4, PGF5. De la sorte, ces deux processus savent que les lignes mémoire source LM2 et LM3 doivent être traitées, et que la ligne mémoire de destination est LM0, ce qui signifie que ces processus PGF4, PGF5 sont les derniers intervenants sur la séquence d'utilisation correspondant au flux MPEG2.

Le dispositif selon l'invention permet ainsi dans l'exemple donné de lire simultanément, à partir d'un flux MPEG2, une piste audio et une piste vidéo de façon parfaitement synchronisée.

De plus, le processus PFG1 charge des données en mémoire pendant que les processus PGF2 et PGF3 lisent et décompressent des données provenant de la mémoire. C'est en effet un avantage de l'invention de permettre à plusieurs processus d'utiliser la mémoire en écriture et/ou lecture simultanément.

Le même type de fonctionnement se déroule pour le traitement du deuxième flux au format DV. Au fur et à mesure de son chargement dans les tampons synchronisés de la ligne mémoire LM4 successivement, la séquence d'utilisation permet l'activation du processus de gestion de flux PGF3 de décompression DV. Ce dernier reçoit les données de chaque tampon synchronisé de la ligne mémoire LM4 au format DV et décompresse et charge ces données décompressées dans les tampons synchronisés successivement des deux lignes mémoire LM5 avec la séquence d'utilisation 3, 4 (PGF3 puis PGF4) et LM6 avec la séquence d'utilisation 3, 5 (PGF3 puis PGF5) vidéo, respectivement audio. Le processus aiguilleur 27 avait communiqué les informations 99 au processus de gestion de flux PGF3 pour lui indiquer l'identification des lignes mémoire source et destination, les séquences d'utilisation ainsi que les numéros des tampons synchronisés de début et de fin (TM91 et TM180).

Il est à noter que, avec un dispositif conforme à l'invention, les tampons synchronisés TM1 à TM90 ou TM91 à TM180 créés sur une même ligne mémoire ne correspondent pas nécessairement à des espaces contigus dans la zone utile 5 de la mémoire auto-administrée. Il en résulte une gestion beaucoup plus souple et efficace de cette zone utile 5, dont les capacités sont grandement améliorées par rapport aux dispositifs antérieurs, dans lesquels une telle utilisation de tampons disjoints pour un même processus et/ou pour le traitement d'un même flux de données n'est pas possible. Mais, les lignes mémoire représentent une abstraction d'attachement et de continuation des tampons synchronisés.

Comme on le voit, les différents processus de gestion de flux reçoivent du processus aiguilleur 27, l'intégralité des informations de synchronisation et ne communiquent pas les uns avec les autres. Ils sont synchronisés à partir de ces informations, et par le module d'administration 32. Seuls les processus de gestion de flux PGF1, PGF2, PGF3 créateurs de tampons synchronisés dans les lignes mémoire reçoivent les séquences d'utilisation correspondantes, et les enregistrent dans la zone d'administration 4 avec les lignes mémoire et l'identificateur des tampons synchronisés correspondants.

Bien évidemment, l'exemple représenté figures 8 et 9 n'est pas limitatif et de très nombreuses autres possibilités sont offertes. Par exemple, deux séquences vidéo au format non compressé, peuvent être lues simultanément sur le même écran, séparées en deux parties distinctes grâce au dispositif selon l'invention. Ainsi, il suffit de prévoir une piste de type par exemple F1 réalisant un filtrage consistant à incruster une image dans une autre et d'appliquer un processus de gestion de flux correspondant à cette incrustation simultanément sur les deux séquences lues en parallèle. Le processus aiguilleur 27 pourra définir trois lignes mémoire, à savoir une ligne mémoire source pour chacune des séquences vidéo à lire, et une troisième ligne mémoire de destination pour recevoir le résultat de l'incrustation qui sera fournie au processus de visualisation vidéo. De nombreux autres exemples sont possibles.

## Revendications

1. Dispositif comprenant :
- des moyens à microprocesseur(s) et mémoire(s) vive(s) aptes à exécuter au moins un système d'exploitation et au moins un programme applicatif de traitement de données,
- au moins une mémoire vive virtuelle, adaptée pour pouvoir être utilisée en tant que mémoire vive de travail pour au moins un programme applicatif, dont l'un au moins est adapté pour le traitement d'au moins un flux de données numériques,
- une pluralité de processus fonctionnels, dits processus de gestion de flux (28-31 ; PGF1-PGF5), adaptés pour pouvoir être chargés en mémoire vive et pour exécuter au moins une tâche sur des données d'un flux multipiste, par l'intermédiaire de tampons de mémoire vive,
- des moyens adaptés pour réaliser la synchronisation de l'utilisation successive des tampons par les processus de gestion de flux (28-31 ; PGF1-PGF5),
**caractérisé en ce que** :
a) il comprend des moyens, dits moyens de configuration, adaptés pour configurer le dispositif avec :
• une zone de mémoire virtuelle, dite mémoire auto-administrée (3), réservée et dédiée au traitement de flux, dit flux multipiste, comprenant une pluralité de pistes lues et/ou écrites et/ou traitées en parallèle, cette mémoire auto-administrée comprenant une zone d'administration (4) dédiée à l'administration de la mémoire auto-administrée, et une zone utile (5) pour le traitement des données,
• un processus fonctionnel, dit processus aiguilleur (27), adapté pour pouvoir être chargé en mémoire vive, et définir et enregistrer dans la zone d'administration (4), une pluralité de lignes mémoire destinées chacune à contenir une liste de tampons, dits tampons synchronisés, de ladite zone utile (5) de la mémoire auto-administrée,
• les processus de gestion de flux (28-31 ; PGF1-PGF5), sont adaptés pour pouvoir être chargés en mémoire vive et, avec au moins une ligne mémoire, créer et utiliser au moins un tampon synchronisé dans cette ligne mémoire, pour exécuter au moins une tâche sur des données d'un flux multipiste, puis libérer ce tampon synchronisé,
b) le processus aiguilleur (27) est adapté pour :
* déterminer, en fonction de contraintes de traitement prédéfinies pour chaque flux multipiste à traiter, une séquence d'utilisation des tampons synchronisés des lignes mémoire par chaque processus de gestion de flux, dit processus actif, concerné par le traitement dudit flux multipiste,
* transmettre à chaque processus actif, la (les) ligne(s) mémoire(s) dans laquelle (lesquelles) il doit créer et/ou utiliser des tampons synchronisés,
c) il comprend un module d'administration (32) adapté pour réaliser la synchronisation de l'utilisation successive des tampons synchronisés de chaque ligne mémoire par les processus actifs en fonction de la séquence d'utilisation déterminée par le processus aiguilleur (27).

2. Dispositif selon la revendication 1, **caractérisé en ce que** le module d'administration (32) est lié au processus aiguilleur (27) et à chaque processus de gestion de flux, et rassemble des fonctions communes de gestion de la mémoire auto-administrée (3).

3. Dispositif selon l'une des revendications 1 ou 2, **caractérisé en ce que** le module d'administration (32) est adapté pour déterminer, lors de la libération par un processus de gestion de flux d'un tampon synchronisé, le processus de gestion de flux subséquent défini dans la séquence d'utilisation, et à défaut, pour supprimer le tampon synchronisé.

4. Dispositif selon l'une des revendications 1 à 3, **caractérisé en ce que** chaque processus de gestion de flux (28-31 ; PGF1-PGF5) est adapté pour traiter les données à chaque instant avec un unique tampon synchronisé d'une ligne mémoire, puis pour libérer ce tampon synchronisé en fin de traitement, l'utilisation de différents tampons synchronisés d'une ligne mémoire par chaque processus de gestion de flux s'effectuant successivement, les uns après les autres, de sorte que plusieurs processus de gestion de flux peuvent être actifs simultanément sur des tampons synchronisés différents.

5. Dispositif selon l'une des revendications 1 à 4, **caractérisé en ce que** le module d'administration (32) est une librairie de fonctions qui comprend les fonctions suivantes :
- création de la zone d'administration (4) et de la zone utile (5) de la mémoire auto-administrée (3),
- initialisation d'une ligne mémoire avec un taux de remplissage maximum de la zone utile (5) pour cette ligne mémoire,
- création d'un tampon synchronisé dans une ligne mémoire,
- libération d'un tampon synchronisé,
- accès à un tampon synchronisé par un processus actif,
- détermination du processus actif subséquent sur la séquence d'utilisation d'un tampon synchronisé d'une ligne mémoire après libération de ce dernier par le processus actif précédent.

6. Dispositif selon l'une des revendications 1 à 5, **caractérisé en ce que** le processus aiguilleur (27) est adapté pour définir, pour chaque piste de chaque flux multipiste à traiter, au moins une ligne mémoire dédiée au traitement de cette piste.

7. Dispositif selon la revendication 6, **caractérisé en ce que** le processus aiguilleur (27) est adapté pour définir, pour chaque piste de chaque flux multipiste à traiter et pour chaque processus de gestion de flux traitant des données de cette piste, au moins une ligne mémoire source fournissant des données à traiter par le processus de gestion de flux et/ou au moins une ligne mémoire destination recevant des données traitées par le processus de gestion de flux.

8. Dispositif selon l'une des revendications 1 à 7, **caractérisé en ce que** le processus aiguilleur (27) est adapté pour définir une et une seule séquence d'utilisation pour tous les tampons synchronisés d'une même ligne mémoire.

9. Dispositif selon l'une des revendications 1 à 8, **caractérisé en ce que** le processus aiguilleur (27) est adapté pour transmettre la séquence d'utilisation de chaque ligne mémoire au premier processus de gestion de flux devant être actif sur un tampon synchronisé de cette ligne mémoire, ce processus de gestion de flux étant créateur de ce tampon synchronisé et définissant et enregistrant dans la zone d'administration (4) des données identifiant ce tampon synchronisé et l'associant à la ligne mémoire, et à la séquence d'utilisation.

10. Dispositif selon l'une des revendications 1 à 9, **caractérisé en ce que** le processus aiguilleur (27) est adapté pour calculer, en fonction de la nature de chaque flux multipiste à traiter, une taille maximum de la zone utile (5) de la mémoire auto-administrée (3) pouvant être donnée à chaque ligne mémoire.

11. Dispositif selon l'une des revendications 1 à 10, **caractérisé en ce que** les processus de gestion de flux (28-31 ; PGF1-PGF5) sont distincts, chacun d'eux exécutant au moins une tâche qui lui est propre.

12. Dispositif selon l'une des revendications 1 à 11, **caractérisé en ce qu'**il comprend au moins un programme applicatif, dit module lanceur, adapté pour charger en mémoire vive les différents processus et modules permettant la configuration et le fonctionnement de la mémoire auto-administrée dont :
- le processus aiguilleur (27),
- chaque processus de gestion de flux susceptible d'être utilisé pour le traitement de flux multipistes,
- le module d'administration (32),
- un module (26) de fenêtrage dynamique sur un écran d'affichage du dispositif, adapté pour pouvoir former une interface homme/machine permettant à un utilisateur de définir chaque flux multipiste à traiter à partir de données sources d'origines diverses.

13. Dispositif selon l'une des revendications 1 à 12, **caractérisé en ce qu'**il comprend :
- au moins un processus de gestion de flux, dit processus de chargement, apte à écrire des données en zone utile (5) de la mémoire auto-administrée ,
- au moins un processus de gestion de flux, dit processus de déchargement, apte à lire des données depuis la zone utile (5) de la mémoire auto-administrée.

14. Dispositif selon l'une des revendications 1 à 13, **caractérisé en ce que** les processus de gestion de flux sont adaptés pour pouvoir être chargés en une zone de mémoire vive distincte de la mémoire auto-administrée (3).

15. Dispositif selon l'une des revendications 1 à 14, **caractérisé en ce que** le processus aiguilleur (27) est adapté pour pouvoir être chargé en une zone de mémoire vive distincte de la mémoire auto-administrée (3).

16. Dispositif selon l'une des revendications 1 à 15, **caractérisé en ce que** le processus aiguilleur (27) est adapté pour :
- dans une première étape d'analyse, analyser les caractéristiques de chaque flux multipiste à traiter et les contraintes de traitement de chaque flux multipiste, de façon à définir les données représentant les lignes mémoires, et des données représentant chaque séquence d'utilisation des tampons synchronisés de chaque ligne mémoire pour le traitement de ce flux multipiste à traiter,
- puis dans une deuxième étape subséquente de traitement, lancer le traitement du flux multipiste selon lesdites données définies préalablement lors de l'étape d'analyse.

17. Dispositif selon l'une des revendications 1 à 16, **caractérisé en ce que** la taille de la mémoire auto-administrée (3) est définie par les moyens de configuration à une valeur fixe prédéterminée.

18. Dispositif selon la revendication 17, **caractérisé en ce que** la taille de la mémoire auto-administrée (3) est comprise entre 20 % et 80 % de celle de la mémoire virtuelle.

19. Dispositif selon l'une des revendications 1 à 18, **caractérisé en ce que** la taille de la zone d'administration (4) est définie par les moyens de configuration à une valeur fixe prédéterminée.

20. Dispositif selon l'une des revendications 1 à 19, **caractérisé en ce que** la mémoire auto-administrée (3) est définie par le processus aiguilleur (27) lors de son chargement en mémoire vive.

21. Dispositif selon l'une des revendications 1 à 20, **caractérisé en ce que** les moyens de configuration sont adaptés pour permettre le traitement de flux multipistes qui sont des flux audiovisuels.

22. Dispositif selon l'une des revendications 1 à 21, **caractérisé en ce que** les moyens de configuration sont adaptés pour permettre le traitement de flux multipistes ayant des pistes dont le format est choisi armi : - les formats de télévision haute définition (TVHD),
- les formats de télévision de définition standard (TVSD),
- les formats de cinéma numérique,
- les formats vidéo compressés (MPEG2, MPEG4, DV...),
- les formats audio non compressés,
- les formats audio compressés,
- les formats d'encapsulation multipiste,
- les formats d'images,
- les formats de données audiovisuelles brutes.

## Patentansprüche

1. Vorrichtung, umfassend:
- Mittel mit Mikroprozessor(en) und RAM-Speicher(n), die ausgelegt sind, um mindestens ein Betriebssystem und mindestens ein Anwendungsprogramm zur Verarbeitung von Daten durchzuführen,
- mindestens einen virtuellen RAM-Speicher, der ausgelegt ist, um als Arbeits-RAM-Speicher für mindestens ein Anwendungsprogramm verwendet zu werden, davon mindestens eines für die Verarbeitung von mindestens einem digitalen Datenstrom ausgelegt ist,
- eine Mehrzahl von Funktionsprozessen, genannt Strom-Management-Prozessen (28 - 31; PGF1 - PGF5), die ausgelegt sind, um in den RAM-Speicher geladen werden zu können, und um mindestens eine Aufgabe auf Daten eines Mehrspur-Stroms über RAM-Speicher-Puffern durchzuführen,
- Mittel, die ausgelegt sind, um die Synchronisation der sukzessiven Verwendung der Puffer durch die Strom-Management-Prozesse (28 - 31; PGF1 - PGF5) durchzuführen,
**dadurch gekennzeichnet, dass**:
a) sie Mittel umfasst, genannt Konfigurationsmittel, die ausgelegt sind, um die Vorrichtung zu konfigurieren mit:
• einem virtuellen Speicherbereich, genannt selbst verwalteter Speicher (3), der für die Verarbeitung des Stroms, genannt Mehrspur-Strom, reserviert und dediziert ist, umfassend eine Mehrzahl von gelesenen und/oder geschriebenen und/oder parallel verarbeiteten Spuren, wobei dieser selbst verwaltete Speicher einen Verwaltungsbereich (4) umfasst, der für die Verwaltung des selbst-verwalteten Speichers dediziert ist, und einen Nutzbereich (5) für die Verarbeitung der Daten,
• einem funktionellen Verfahren, genannt Schaltprozess (27), der ausgelegt ist, um in den RAM-Speicher geladen werden zu können und im Verwaltungsbereich (4) eine Mehrzahl von Speicherlinien zu definieren und zu registrieren, die jeweils dazu bestimmt sind, eine Liste von Puffern, genannt synchronisierte Puffer, des Nutzbereichs (5) des selbst verwalteten Speichers zu enthalten,
• den Strom-Management-Prozessen (28 - 31; PGF1 - PGF5), die ausgelegt sind, um in den RAM-Speicher geladen werden zu können und, mit mindestens einer Speicherlinie, in dieser Speicherlinie mindestens einen synchronisierten Puffer zu erzeugen und zu verwenden, um mindestens eine Aufgabe auf Daten eines Mehrspur-Stroms durchzuführen und dann diesen synchronisierten Puffer freizuschalten,
b) der Schaltprozess (27) ausgelegt ist, um:
* je nach vordefinierten Verarbeitungsbedingungen für jeden Mehrspur-Strom, der verarbeitet werden soll, eine Sequenz zur Verwendung der synchronisierten Puffer der Speicherlinien für jeden Strom-Management-Prozess, genannt aktiver Prozess, zu bestimmen, der von der Verarbeitung des Mehrspur-Stroms betroffen ist,
* an jeden aktiven Prozess die Speicherlinie(n), in der(denen) er synchronisierte Puffer erzeugen und/oder verwenden muss, zu übertragen,
c) er ein Verwaltungsmodul (32) umfasst, das ausgelegt ist, um die Synchronisierung der sukzessiven Verwendung der synchronisierten Puffer jeder Speicherlinie durch die aktiven Prozesse je nach der Sequenz zur Verwendung durchzuführen, die vom Schaltprozess (27) festgelegt ist.

2. Vorrichtung nach Anspruch 1, **dadurch gekennzeichnet, dass** das Verwaltungsmodul (32) mit dem Schaltprozess (27) und mit jedem Strom-Management-Prozess verbunden ist und gemeinsame Funktionen zur Verwaltung des selbst verwalteten Speichers (3) vereint.

3. Vorrichtung nach einem der Ansprüche 1 oder 2, **dadurch gekennzeichnet, dass** das Verwaltungsmodul (32) ausgelegt ist, um, bei der Freischaltung durch einen Strom-Management-Prozess eines synchronisierten Puffers, den folgenden Strom-Management-Prozess zu bestimmen, der in der Sequenz zur Verwendung definiert ist, und andernfalls, um den synchronisierten Puffer zu löschen.

4. Vorrichtung nach einem der Ansprüche 1 bis 3, **dadurch gekennzeichnet, dass** jeder Strom-Management-Prozess (28 - 31; PGF1 - PGF5) ausgelegt ist, um die Daten in jedem Augenblick mit einem einzigartigen synchronisierten Puffer einer Speicherlinie zu verarbeiten, dann, um diesen synchronisierten Puffer am Ende der Verarbeitung freizuschalten, wobei die Verwendung von verschiedenen synchronisierten Puffern einer Speicherlinie durch jeden Strom-Management-Prozess sukzessiv, aufeinander folgend durchgeführt wird, so dass verschiedene Strom-Management-Prozesse gleichzeitig auf verschiedenen synchronisierten Puffern aktiv sein können.

5. Vorrichtung nach einem der Ansprüche 1 bis 4, **dadurch gekennzeichnet, dass** das Verwaltungsmodul (32) eine Bibliothek von Funktionen ist, die die folgenden Funktionen umfasst:
- Erzeugen des Verwaltungsbereichs (4) und des Nutzbereichs (5) des selbst verwalteten Speichers (3),
- Initialisieren einer Speicherlinie mit einer maximalen Füllrate des Nutzbereichs (5) für diese Speicherlinie,
- Erzeugen eines synchronisierten Puffers in einer Speicherlinie,
- Freischalten eines synchronisierten Puffers,
- Zugreifen auf einen synchronisierten Puffer durch einen aktiven Prozess,
- Bestimmen des folgenden aktiven Prozesses auf der Sequenz zur Verwendung eines synchronisierten Puffers einer Speicherlinie nach der Freisetzung dieses Letzteren durch den vorhergehenden aktiven Prozess.

6. Vorrichtung nach einem der Ansprüche 1 bis 5, **dadurch gekennzeichnet, dass** der Schaltprozess (27) ausgelegt ist, um für jede Spur jedes Mehrspur-Stroms, der verarbeitet werden soll, mindestens eine Speicherlinie zu definieren, die für die Verarbeitung dieser Spur dediziert ist.

7. Vorrichtung nach Anspruch 6, **dadurch gekennzeichnet, dass** der Schaltprozess (27) ausgelegt ist, um für jede Spur jedes Mehrspur-Stroms, der verarbeitet werden soll, und für jeden Strom-Management-Prozess, der Daten dieser Spur verarbeitet, mindestens eine Quell-Speicherlinie zu definieren, die Daten liefert, die durch den Strom-Management-Prozess verarbeitet werden sollen, und/oder mindestens eine Ziel-Speicherlinie, die Daten empfängt, die durch den Strom-Management-Prozess verarbeitet wurden.

8. Vorrichtung nach einem der Ansprüche 1 bis 7, **dadurch gekennzeichnet, dass** der Schaltprozess (27) ausgelegt ist, um eine nur eine Sequenz zur Verwendung für alle synchronisierten Puffer einer gleichen Speicherlinie zu definieren.

9. Vorrichtung nach einem der Ansprüche 1 bis 8, **dadurch gekennzeichnet, dass** der Schaltprozess (27) ausgelegt ist, um die Sequenz zur Verwendung von jeder Speicherlinie an den ersten Strom-Management-Prozess zu übertragen, der auf einem synchronisierten Puffer dieser Speicherlinie aktiv sein muss, wobei dieser Strom-Management-Prozess diesen synchronisierten Puffer erzeugt und im Verwaltungsbereich (4) Daten definiert und registriert, die diesen synchronisierten Puffer identifizieren und ihn mit der Speicherlinie und mit der Sequenz zur Verwendung identifizieren.

10. Vorrichtung nach einem der Ansprüche 1 bis 9, **dadurch gekennzeichnet, dass** der Schaltprozess (27) ausgelegt ist, um, je nach der Art jedes Mehrspur-Stroms, der verarbeitet werden soll, einen maximalen Nutzbereich (5) des selbst verwalteten Speichers (3) zu berechnen, der jeder Speicherlinie zugeordnet werden kann.

11. Vorrichtung nach einem der Ansprüche 1 bis 10, **dadurch gekennzeichnet, dass** die Strom-Management-Prozesse (28 - 31; PGF1 - PGF5) verschieden sind, wobei jeder von ihnen mindestens eine Aufgabe erfüllt, die ihm zu eigen ist.

12. Vorrichtung nach einem der Ansprüche 1 bis 11, **dadurch gekennzeichnet, dass** sie mindestens ein Anwendungsprogramm umfasst, genannt Startmodul, das ausgelegt ist, um in den RAM-Speicher die verschiedenen Prozesse und Module zu laden, die die Konfiguration und die Funktion des selbst verwalteten Speichers ermöglichen, darunter:
- der Schaltprozess (27),
- jeder Strom-Management-Prozess, der für die Verarbeitung von Mehrspur-Strömen verwendet werden kann,
- das Verwaltungsmodul (32),
- ein dynamisches Fenster-Modul (26) auf einem Anzeigebildschirm der Vorrichtung, das ausgelegt ist, um eine Mensch-Maschinen-Schnittstelle zu bilden, die einem Benutzer ermöglicht, jeden Mehrspur-Strom ausgehend von Quelldaten verschiedenen Ursprungs zu definieren.

13. Vorrichtung nach einem der Ansprüche 1 bis 12, **dadurch gekennzeichnet, dass** sie Folgendes umfasst:
- mindestens einen Strom-Management-Prozess, genannt Ladeprozess, der ausgelegt ist, um Daten in den Nutzbereich (5) des selbst verwalteten Speichers zu schreiben,
- mindestens einen Strom-Management-Prozess, genannt Entladeprozess, der ausgelegt ist, um Daten aus dem Nutzbereich (5) des selbst verwalteten Speichers zu lesen.

14. Vorrichtung nach einem der Ansprüche 1 bis 13, **dadurch gekennzeichnet, dass** die Strom-Management-Prozesse ausgelegt sind, um in einen Bereich des RAM-Speichers geladen werden zu können, der verschieden vom selbst verwalteten Speicher (3) ist.

15. Vorrichtung nach einem der Ansprüche 1 bis 14, **dadurch gekennzeichnet, dass** der Schaltprozess (27) ausgelegt ist, um in einen Bereich des RAM-Speichers geladen werden zu können, der verschieden vom selbst verwalteten Speicher (3) ist.

16. Vorrichtung nach einem der Ansprüche 1 bis 15, **dadurch gekennzeichnet, dass** der Schaltprozess (27) ausgelegt ist, um:
- in einem ersten Analyseschritt die Eigenschaften jedes Mehrspur-Stroms, der verarbeitet werden soll, und die Bedingungen der Verarbeitung jedes Mehrspur-Stroms zu analysieren, um Daten zu definieren, die die Speicherlinien darstellen, sowie Daten, die jede Sequenz zur Verwendung der synchronisierten Puffer jeder Speicherlinie für die Verarbeitung dieses Mehrspur-Stroms, der verarbeitet werden soll, darstellten,
- dann, in einem folgenden zweiten Schritt des Verarbeitens, Starten der Verarbeitung des Mehrspur-Stroms gemäß den Daten, die zuvor, beim Analyseschritt, definiert wurden.

17. Vorrichtung nach einem der Ansprüche 1 bis 16, **dadurch gekennzeichnet, dass** die Größe des selbst verwalteten Speichers (3) durch Konfigurationsmittel auf einen vorbestimmten festen Wert definiert ist.

18. Vorrichtung nach Anspruch 17, **dadurch gekennzeichnet, dass** die Größe des selbst verwalteten Speichers (3) zwischen 20 % und 80 % derjenigen des virtuellen Speichers liegt.

19. Vorrichtung nach einem der Ansprüche 1 bis 18, **dadurch gekennzeichnet, dass** die Größe des Verwaltungsbereichs (4) durch die Konfigurationsmittel auf einen vorbestimmten festen Wert definiert ist.

20. Vorrichtung nach einem der Ansprüche 1 bis 19, **dadurch gekennzeichnet, dass** der selbst verwaltete Speicher (3) durch den Schaltprozess (27) bei seiner Ladung in den RAM-Speicher definiert ist.

21. Vorrichtung nach einem der Ansprüche 1 bis 20, **dadurch gekennzeichnet, dass** die Konfigurationsmittel ausgelegt sind, um die Verarbeitung von Mehrspur-Strömen zu ermöglichen, die audiovisuelle Ströme sind.

22. Vorrichtung nach einem der Ansprüche 1 bis 21, **dadurch gekennzeichnet, dass** die Konfigurationsmittel ausgelegt sind, um die Verarbeitung von Mehrspur-Strömen zu ermöglichen, deren Format ausgewählt ist aus:
- den hoch auflösenden Fernsehformaten (TVHD),
- den standardmäßig auflösenden Fernsehformaten (TVSD),
- den digitalen Kinoformaten,
- den komprimierten Videoformaten (MPEG2, MPEG4, DV...),
- den nicht komprimierten Audioformaten,
- den komprimierten Audioformaten,
- den eingekapselten Mehrspur-Formaten,
- den Bildformaten,
- den Formaten mit rohen audiovisuellen Daten.

## Claims

1. Device comprising:
- means with microprocessor(s) and RAM(s), which are suitable for executing at least one operating system and at least one data processing application program,
- at least one virtual RAM, which is suitable for use as working RAM for at least one application program, of which at least one is suitable for processing at least one flow of digital data,
- multiple functional processes, called flow management processes (28-31; PGF1 - PGF5), which are suitable for being loaded into RAM and executing at least one task on the data of a multitrack flow via RAM buffers,
- means suitable for synchronizing the successive use of buffers by the flow management processes (28-31; PGF1-PGF5),
**characterised in that**:
a) this device being suitable for being configured with:
• a virtual memory area, called the self-administered memory (3), which is reserved and dedicated to the processing of flows, called multitrack flows, comprising multiple tracks which are read and/or written and/or processed in parallel, this self-administered memory comprising an administration area (4) which is dedicated to the administration of the self-administered memory, and a useful area (5) for processing the data,
• a functional process, called the switcher process (27), which is suitable for being loaded into RAM, and for defining and recording in the administration area (4)multiple memory lines which are each intended to contain a list of buffers, called synchronized buffers, of the said useful area (5) of the self-administered memory,
• the flow management processes (28-31;PGF1 - PGF5) being suitable for being loaded into RAM, and, with at least one memory line, for creating and/or using at least one synchronized buffer in this memory line, for executing at least one task on the data of a multitrack flow, and then for releasing this synchronized buffer,
b) the switcher process (27) being suitable for:
* determining, as a function of predefined processing constraints for each multitrack flow to be processed, a sequence for using the synchronized buffers of the memory lines by each flow management process, called an active process, which is involved in the processing of the said multitrack flow,
* transmitting to each active process the memory line(s) in which it must create and/or use synchronized buffers,
c) the device including an administration module(32), which is suitable for synchronizing the successive use of the synchronized buffers of each memory line by the active processes, as a function of the use sequence which the switcher process determines(27).

2. A device according to claim 1, **characterised in that** the administration module (32) is linked to the switcher process (27)and to each flow management process, and combines the common management functions of the self-administered memory (3).

3. A device according to any one of claims 1 or 2, **characterised in that** the administration module (32) is suitable for determining, when a synchronized buffer is released by a flow management process, the subsequent flow management process which is defined in the use sequence, and if none is defined, for deleting the synchronized buffer.

4. A device according to any one of claims 1 to 3, **characterised in that** each flow management process (28-31;PGF1 - PGF5) is suitable for processing the data at each instant with a single synchronized buffer of one memory line, and then for releasing this synchronized buffer at the end of processing, the various synchronized buffers of a memory line being used in succession by each flow management process, one after the other, in such a way that several flow management processes can be active simultaneously on different synchronized buffers.

5. A device according to any one of claims 1 to 4, **characterised in that** the administration module (32) is a function library which includes the following functions:
- creating the administration area (4) and useful area (5) of the self-administered memory (3),
- initializing a memory line with a maximum rate of filling the useful area (5) for this memory line,
- creating a synchronized buffer in a memory line,
- releasing a synchronized buffer,
- access to a synchronized buffer by an active process,
- determining the subsequent active process in the use sequence of a synchronized buffer of a memory line, after the synchronized buffer has been released by the previous active process.

6. A device according to any one of claims 1 to 5, **characterised in that** the switcher process (27) is suitable for defining, for each track of each multitrack flow to be processed, at least one memory line which is dedicated to the processing of this track.

7. A device according to claim 6, **characterised in that** the switcher process (27) is suitable for defining, for each track of each multitrack flow to be processed and for each flow management process which processes the data of this track, at least one source memory line which supplies data to be processed by the flow management process, and/or at least one destination memory line which receives the data which the flow management process has processed.

8. A device according to any one of claims 1 to 7, **characterised in that** the switcher process (27) is suitable for defining one and only one use sequence for all the synchronized buffers of the same memory line.

9. A device according to any one of claims 1 to 8, **characterised in that** the switcher process (27) is suitable for transmitting the use sequence of each memory line to the first flow management process which must be active on a synchronized buffer of this memory line, this flow management process being the creator of this synchronized buffer, and defining and recording, in the administration area (4), data which identifies this synchronized buffer and associates it with the memory line and use sequence.

10. A device according to any one of claims 1 to 9, **characterised in that** the switcher process (27) is suitable for calculating, as a function of the nature of each multitrack flow to be processed, a maximum size of the useful area (5) of the self-administered memory (3) which can be given to each memory line.

11. A device according to any one of claims 1 to 10, **characterised in that** the flow management processes (28-31; PGF1 - PGF5) are distinct, and each of them carries out at least one task which belongs to it.

12. A device according to any one of claims 1 to 11, **characterised in that** including at least one application program, called the launcher module, which is suitable for loading into RAM the various processes and modules which make the configuration and functioning of the self-administered memory possible, including:
- the switcher process (27),
- each flow management process which is liable to be used for processing multitrack flows,
- the administration module (32),
- a module (26) for dynamic windowing on a display screen of the device, suitable for forming a human/machine interface which enables a user to define each multitrack flow to be processed from source data with various origins.

13. A device according to any one of claims 1 to 12, **characterised in that** it comprises:
- at least one flow management process, called the loading process, is suitable for writing data into the useful area (5) of the self-administered memory,
- at least one flow management process, called the unloading process, is suitable for reading data from the useful area (5) of the self-administered memory.

14. A device according to any one of claims 1 to 13, **characterised in that** the flow management processes are suitable for being loaded into a RAM area which is distinct from the self-administered memory (3).

15. A device according to any one of claims 1 to 14, **characterised in that** the switcher process (27) is suitable for being loaded into a RAM area which is distinct from the self-administered memory (3).

16. A device according to any one of claims 1 to 15, **characterised in that** the switcher process (27) is suitable for:
- in a first analysis phase, analyzing the characteristics of each multitrack flow to be processed and the processing constraints of each multitrack flow, in such a way as to define the data representing the memory lines and the data representing each use sequence of the synchronized buffers of each memory line for processing this multitrack flow,
- then, in a second, subsequent processing stage, launching the processing of the multitrack flow according to the said data, which was defined in advance in the analysis phase.

17. A device according to any one of claims 1 to 16, **characterised in that** the size of the self-administered memory (3) is defined by the configuration means at a predetermined fixed value.

18. A device according to claim 17, **characterised in that** the size of the self-administered memory (3) is between 20% and 80% of that of the virtual memory.

19. A device according to any one of claims 1 to 18, **characterised in that** the size of the administration area (4) is defined by the configuration means at a predetermined fixed value.

20. A device according to any one of claims 1 to 19, **characterised in that** the self-administered memory (3) is defined by the switcher process (27) when it is loaded into RAM.

21. A device according to any one of claims 1 to 20, **characterized in that** the configuration means are suitable for allowing the processing of multitrack flows which are audiovisual flows.

22. A device according to any one of claims 1 to 21, **characterised in that** the configuration means are suitable for allowing the processing of multitrack flows having tracks of which the format is chosen from:
- high-definition television formats (TVHD),
- standard-definition television formats (TVSD),
- digital cinema formats,
- compressed video formats (MPEG2, MPEG4, DV, etc.),
- non-compressed audio formats,
- compressed audio formats,
- multitrack encapsulation formats,
- picture formats,
- raw audiovisual data formats.
